(19) Europäisches Patentamt
European Patent Office
Office européen des brevets

(11) EP 2 644 735 B1

(12) **EUROPEAN PATENT SPECIFICATION**

(45) Date of publication and mention of the grant of the patent:
**10.05.2017 Bulletin 2017/19**

(21) Application number: **11843880.3**

(22) Date of filing: **27.10.2011**

(51) Int Cl.:
*C22C 38/00* (2006.01) *C22C 38/02* (2006.01)
*C22C 38/08* (2006.01) *C22C 38/12* (2006.01)
*C22C 38/14* (2006.01) *C22C 38/16* (2006.01)
*C22C 38/04* (2006.01) *C22C 38/06* (2006.01)
*B23K 35/30* (2006.01) *B23K 15/00* (2006.01)
*C21D 8/02* (2006.01) *C22C 19/03* (2006.01)
*C22C 19/00* (2006.01)

(86) International application number:
**PCT/JP2011/074784**

(87) International publication number:
**WO 2012/070355 (31.05.2012 Gazette 2012/22)**

(54) **ELECTRON-BEAM WELDED JOINT, STEEL MATERIAL FOR ELECTRON-BEAM WELDING, AND MANUFACTURING METHOD THEREFOR**

ELEKTRONENSTRAHL-SCHWEISSVERBINDUNG, STAHLMATERIAL ZUM ELEKTRONENSTRAHL-SCHWEISSEN UND HERSTELLUNGSVERFAHREN DAFÜR

JOINT SOUDÉ PAR FAISCEAU D'ÉLECTRONS, ACIER POUR SOUDAGE PAR FAISCEAU D'ÉLECTRONS, ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 JP 2010260531**

(43) Date of publication of application:
**02.10.2013 Bulletin 2013/40**

(73) Proprietor: **Nippon Steel & Sumitomo Metal Corporation**
**Tokyo 100-8071 (JP)**

(72) Inventors:
- **HONMA, Ryuichi**
  **Tokyo 100-8071 (JP)**
- **UEMORI, Ryuji**
  **Tokyo 100-8071 (JP)**
- **ISHIKAWA, Tadashi**
  **Tokyo 100-8071 (JP)**
- **KOJIMA, Akihiko**
  **Tokyo 100-8071 (JP)**
- **HOSHINO, Manabu**
  **Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A1- 1 736 562** **EP-A1- 1 777 315**
**EP-A1- 2 070 631** **EP-A1- 2 236 631**
**WO-A1-2010/052927** **JP-A- 3 047 918**
**JP-A- 8 060 293** **JP-A- S6 415 321**
**JP-A- H05 295 480** **JP-A- 2001 089 825**
**JP-A- 2001 323 336** **JP-A- 2002 060 894**
**JP-A- 2003 003 233** **JP-A- 2003 293 079**
**JP-A- 2004 011 008** **JP-A- 2004 011 008**
**JP-A- 2004 216 384** **JP-A- 2006 241 551**
**JP-A- 2007 046 096** **JP-A- 2007 277 681**
**JP-A- 2008 214 754** **JP-A- 2009 041 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a steel for electron-beam welding, which is to be welded by emitting an electron-beam to a weld target portion with a sheet-shaped or foil-shaped insert metal being inserted between groove faces thereof, and a method of manufacturing the steel for electron-beam welding, and further relates to an electron-beam welded joint formed by emitting an electron-beam to a weld target portion of the steel in which an insert metal is inserted between groove faces thereof.

### Background Art

In recent years, problems have arisen of reducing $CO_2$ gas, which is said to be a cause of global warming, or the future exhaustion of oil or other fossil fuels. To address these problems, recyclable natural energy has been actively used. Wind power is one form of promising recyclable natural energies, and large-scale wind power generators have been increasingly constructed.

The most suitable area for wind power generators to be constructed is an area where strong wind is expected to blow constantly. Thus, off-shore wind power generators are under planning or actually in operation all over the world (see Patent Documents 1 to 4).

In order to build a tower for wind power generation at sea, it is necessary to drive a foundation portion of the tower into seabed. Further, in order to obtain sufficient height of turbine blades of the wind power generator from the sea level, a foundation portion of the tower is required to have sufficient length.

Thus, the foundation portion of the tower of the wind power generator employs a steel pipe structure having a wall thickness exceeding 50 mm, for example, of approximately 1.00 mm, and a large diameter in cross-section of approximately 4 m. Further, the total height of the tower is as high as 80m or more. In recent years, a large steel-structure such as a tower for wind power generation has been required to be welded and built through electron-beam welding on the coast near the construction site in an easy and efficient manner.

In other words, under the circumstances described above, there arises a new technical demand for welding an ultra-thick steel plate having a thickness of 100 mm on-site in a highly efficient manner.

In general, a high-energy-density beam welding such as electron-beam welding and laser beam welding exhibits high efficiency. However, the thickness of the steel plate to be welded with laser beam has been limited. Further, the conventional electron-beam welding is required to be performed in a vacuum chamber under a high vacuum state. Thus, the thickness or size of the steel plate that can be welded through the high-energy-density beam welding largely depends on the capacity of welding equipment or the capacity of the vacuum chamber.

In recent years, to address the circumstances described above, an electron-beam welding method has been proposed that employs reduced pressure in the vicinity of a weld target portion, thereby efficiently welding an ultra-thick steel plate with a thickness of approximately 100 mm on-site. For example, Welding Institute of the United Kingdom has developed a welding method (reduced pressured electron-beam welding: RPEBW) enabling working under a low vacuum state (see Patent Document 5).

With the reduced pressured electron-beam welding (RPEBW), it is possible to efficiently perform welding, by locally reducing the pressure of the weld target portion to be a vacuum state in a case where a large-scale steel structure such as the tower of the wind power generator is constructed. The RPEBW method is performed in a state in which the degree of vacuum is low as compared with the method of performing welding in the vacuum chamber. However, in the RPEBW method, the toughness of a welded metal (WM) can be expected to be improved as compared with the conventional arc welding.

In general, a fracture toughness value $\delta_c$ based on fracture mechanics is known as an index for quantitatively evaluating the safety of a welded structure. The $\delta_c$ can be obtained through a CTOD (crack tip opening displacement) test. The fracture toughness is affected by a size of a test piece. Thus, although favorable results can be obtained through a small-sized test such as the conventional V-notch Charpy impact test, it is not always true that the favorable fracture toughness value $\delta_c$, which is 0.5 mm or more at 0°C, can be obtained through the CTOD test with a welded joint in the large-scale steel structure.

The electron-beam welding method is a method employing energy of the electron-beam to once melt and solidify the base metal of a weld target portion to weld. Normally, the compositions of the weld target portion in the electron-beam welding method are almost the same as those of the base metal (steel). On the other hand, in large-heat input arc welding such as electro gas welding, mechanical properties such as hardness and the fracture toughness value $\delta_c$ of the welded metal may be adjusted by using, for example, welding wire. The welding wire is not generally used in the electron-beam welding method.

In view of the above-described circumstances, a method of optimizing the hardness or cleanliness of the welded metal (WM) has been proposed to improve the fracture toughness value $\delta_c$ of the electron-beam welded joint (see, for example, Patent Documents 6 and 7). Patent Document 6 proposes setting the hardness of the welded metal to be more than 110% and not more than 220% of that of the base metal, and setting the width of the welded metal to be 20% or less of the thickness of the steel. Further, Patent Document 7 proposes setting the amount of O in the welded metal to 20 ppm or more, and the number of oxides having a diameter of 2.0 μm or more to 10 pieces/$mm^2$ or less.

Related Art Documents

Patent Documents

Patent Document 1: Japanese Unexamined Patent Application, First Publication No. 2008-111406
Patent Document 2: Japanese Unexamined Patent Application, First Publication No. 2007-092406
Patent Document 3: Japanese Unexamined Patent Application, First Publication No. 2006-322400
Patent Document 4: Japanese Unexamined Patent Application, First Publication No. 2006-037397
Patent Document 5: PCT International Publication No. WO 99/16101
Patent Document 6: Japanese Unexamined Patent Application, First Publication No. 2007-21532
Patent Document 7: Japanese Unexamined Patent Application, First Publication No. 2008-88504


JP2004-011008 A discloses a steel member and a structure which have strength satisfying API (American Pipe Institute) standards 5L-X65 or higher, and in which critical CTOD (Crack Tip Opening Displacement) at -10°C is ≥ 0.20 mm in both of a weld metal and a weld line in the weld zone with electron beam welding or laser welding applied.

JP2003-293079 A discloses a steel which has excellent HIC (hydrogen induced cracking) resistance and strength of 5L-X65 or higher in the API standards, and in which limits CTOD (crack tip opening displacement) at -10°C is ≥0.20 mm in both of WM (weld metal) and FL (fusion lines) in a weld zone with electron beam welding or laser welding applied, and to provide a steel structure.

JP2007-277681 A discloses a high-strength thick steel sheet for a marine structure, which can be manufactured at a low cost without employing a complicated manufacturing process and has superior characteristics in a high-heat-input HAZ.

EP 2 236 631 A1 discloses a process for producing thick high-strength steel plate excellent in brittle fracture arrestability and thoughness of zone affected by heat in large-heat-input welding.

EP 1 736 562 A1 discloses a thick high strength steel plate having excellent low temperature toughness in welding heat affected zone caused by high heat input welding.

WO2010/052927 A1 discloses a method for manufacturing a steel plate for an ultrahigh-strength line pipe.

EP 1 777 315 A1 discloses a high strength thick steel plate for marine structures superior in weldability and low temperature toughness of the HAZ.

JP2008-214754 discloses a method for producing a thick high strength steel plate having good brittle fracture spreading resistant characteristic and toughness at high heat input welding thermal affected part, and the thick high strength steel plate obtained with this method.

JP2001-89825 A discloses a steel product having superior HAZ toughness even at large heat input welding of>20 kJ/mm amount of heat input.

JP2001-323336 A discloses a steel sheet having high strength of>550 MPa at a yield point and also excellent in HAZ toughness (particularly the characteristics of the generation and propagation arrest of a brittle crack) in small-medium heat input welding.

JP2006-241551 A provides a thick steel plate having excellent weldability and low temperature toughness in which the increase of strength and functionality and the reduction of cost can be attained by increasing the amount of Mn to be added and reducing the amounts of Ni and Cu to be added.

JP2009-041057 A discloses a thick steel plate which shows adequate HAZ toughness even in high-heat-input welding, and shows such superior shear cutting as not to cause shear-cutting crack even when having been cut with a shear cutting machine.

JP2007-046096 A discloses a continuously cast slab which simultaneously satisfies a sheet thickness of 50 to 80 mm, a yield strength in a class of 390 to 460 MPa, toughness in the central part of the sheet thickness, high heat input weld HAZ (Heat Affected Zone) toughness and high rolling efficiency.

Disclosure of Invention

Problems to be Solved by Invention

When a tower of a wind power generator at sea is constructed, steels are butted to each other to weld, and the welded steels are used without applying any thermal treatment to the welded portion. Thus, a welded metal (WM) and a weld heat-affected zone (HAZ: heat-affected zone, hereinafter, referred to simply as "heat-affected zone") are required to have excellent toughness. In the case of the electron-beam welding, since the welding wire is not used, the toughnesses of the welded metal and the heat-affected zone are controlled by adjusting the composition of base metal.

Conventionally, a method of controlling inclusions in the welded metal, a relationship between the hardness of the welded metal and the hardness of the base metal, or the width of the welded metal is proposed. However, in the case where the toughness of the heat-affected zone is not sufficient, the fracture toughness of the weld target portion as a whole reduces.

It should be noted that, by attaching a plate-like or foil-like Ni (insert metal) to a welded surface (groove face), and applying electron-beam welding, it is possible to enhance the toughness of the welded metal (WM) so as to be higher than that of the base metal. However, in this case, the difference in hardness between the welded metal and the heat-affected zone significantly increases if the compositions of the base metal are not appropriate. This leads to a significant reduction in the fracture toughness value $\delta_c$ of the heat-affected zone where the difference in hardness is significantly large.

According to the study made by the present inventors, in the electron-beam welded joint, even if the insert metal is not used, the appropriate compositions for improving the toughness are not always the same between the welded metal and the heat-affected zone (base metal). Thus, the high toughness cannot be obtained at the welded metal even if the electron-beam welding is applied to the conventional high-HAZ-toughness steel for arc welding. Further, the high toughness cannot be obtained at the heat-affected zone even if the compositions of the steel for arc welding are optimized by taking the toughness of the welded metal formed by the electron-beam welding into consideration.

In other words, the electron-beam welding and the arc welding are fundamentally different in the welding method and the formed joint structure. Thus, the problem of the electron-beam welding cannot be solved by using the manner for solving the problem of the arc welding.

The present invention has been made in view of the circumstances described above, and an object of the present invention is to provide a steel for electron-beam welding having a thickness of 45 mm or more and constituting a foundation portion of a tower of a wind power generator at sea, in which an electron-beam is emitted to a weld target portion in which a sheet-shaped or foil-shaped insert metal is inserted between groove faces thereof, and which can be used for forming a welded joint exhibiting increased strength and appropriate balance of the fracture toughness value between the welded metal (WM), the heat-affected zone (HAZ) and the base metal (BM), a method of manufacturing the steel for electron-beam welding, as well as an electron-beam welded joint which is formed by emitting an electron-beam to a weld target portion in which the steels sandwich an insert metal.

Solution to Problems

According to the present invention, Mn of 1.5 mass% or more is added to a steel for electron-beam welding to secure hardenability, Al which is strong deoxidation element is added to the steel for electron-beam welding to precipitate fine inclusion particles such as nitrides containing Ti of 10% or more (hereinafter, referred to simply as Ti nitrides) and to use the Ti nitrides as pinning particles for suppressing grain growth or nuclei for intra-granular transformation, and to make fracture toughness values of steel (BM), heat-affected zone (HAZ), and welded metal (WM) appropriately balanced, the steel for electron-beam welding being welded in a manner that an electron-beam is emitted to a weld target portion in which a sheet-shaped or foil-shaped insert metal is inserted between groove faces thereof.

In particular, with the electron-beam welding, in which the WM width and the HAZ width are narrow and the amount of heat inputted is low, fine Ti nitrides suppress coarsening of the austenite grain in the heat-affected zone (HAZ) and contribute to improving the fracture toughness at the welded portion.

Further, according to the present invention, by controlling an index obtained with newly introduced indexing formulae CeEBB and CeEBW of hardenability for electron-beam welding, the fracture toughnesses of the steel (BM), the welded metal (WM), and the heat-affected zone (HAZ) are appropriately balanced to secure a desired fracture toughness at the electron-beam welded joint, which is formed by using the insert metal, as a whole. Yet further, according to the present invention, the amount of Mn is increased in order to enhance the hardenability, and the amounts of Cr, Mo, Cu, Ni, and/or Nb are decreased in order to reduce the manufacturing cost of the steel for electron-beam welding.

The indexes CeEBB and CeEBW of hardenability for electron-beam welding is index newly introduced by the present inventors to improve the fracture toughness of the electron-beam welded joint formed by using the insert metal. The technical meaning of the indexes CeEBB and CeEBW will be described later along with the technical meaning of an index (ratio) "C/CeEBB" (C: the amount of C), which is also introduced.

An aspect of the present invention employs the following.

(1) An electron-beam welded joint according to an aspect of the invention is an electron-beam welded joint manufactured by applying an electron-beam welding to a steel and forming a welded metal, the steel consisting of a composition, by mass%, C: 0.02% to 0.10%, Si: 0.03% to 0.30%, Mn: 1,5% to 2.5%, Al: more than 0.004% to 0.05% or less, Ti: 0.005% to 0.015%, N: 0.0020% to 0.0060%, Nb: 0% to 0.004%, V: 0% to 0.030%, Cr: 0% to 0.50%, Mo: 0% to 0.50%, Cu: 0% to 0.25%, Ni: 0% to 0.50%, B: 0% to 0.0030%, Ca: 0% to 0.0050%, P: limited to 0.015% or less, S: limited to 0.010% or less, O: limited to 0.0035% or less, Mg: limited to 0.0002% or less; and a balance consisting of iron and unavoidable impurities, wherein an index value CeEBB obtained by substituting the composition of the steel into a following Formula 1 is 0.42% to 0.65%, a number of inclusion particles having an equivalent circle diameter of 1.0 $\mu$m or more measured by using FE-SEM is 20 pieces/mm$^2$ or less at a thickness center portion in a cross-section along a thickness direction of the steel, a number of nitride particles containing Ti of 10% or more and having an equivalent circle diameter of 0.05 $\mu$m or more and less than 0.5 $\mu$m measured by using FE-TEM at a magnification of 10000-fold to 1000000-fold is $1 \times 10^3$ pieces/mm$^2$ or more and less than $5 \times 10^4$ pieces/mm$^2$ at the thickness center portion, the welded metal consisting of a composition, by mass%, C: 0.02% to 0.10%, Si: 0.03% to 0.30%, Mn: 1.2% to 2.4%, Al: more than 0.004% to 0.05% or less, Ni: 1.0% to 2.3%, Ti: 0.005% to 0.015%, N: 0.0020% to 0.0060%, Nb: 0% to 0.004%, V: 0% to 0.030%, Cr: 0% to 0.50%, Mo: 0% to 0.50%, Cu: 0% to 0.25%, B: 0% to 0.0030%, Ca: 0% to 0.0050%, P: limited to 0.015% or less, S: limited to 0.010% or less, O: limited to 0.0020% or less, Mg: limited to 0,0002% or less and a balance consisting of iron and unavoidable impurities, and an index value CeEBW obtained by substituting the composition of the welded metal into a following Formula 2 is 0.56% to 0.73%, and a C/CeEBB, which is a ratio of an amount in mass% of C in the steel relative to the index value CeEBB, is 0.02 to 0.15,

$$CeEBB = C + (1/4)Mn + (1/15)Cu + (1/15)Ni + (1/5)Cr + (1/5)Mo + (1/5)V \quad \text{......(Formula 1)}$$

where C, Mn, Cu, Ni, Cr, Mo and V represent amounts in mass% of each element contained in the composition of the steel, and

$$CeEBW = C + (1/4)Mn + (1/15)Cu + (1/15)Ni + (1/5)Cr + (1/5)Mo + (1/5)V \quad \text{......(Formula 2)}$$

where C, Mn, Cu, Ni, Cr, Mo and V represent amounts in a mass% of each element contained in the composition of the welded metal.

(2) In the electron-beam welded joint according to (1), the steel may have a thickness of 45 to 150 mm.

(3) In the electron-beam welded joint according to any one of the above (1) to (2), when a crack tip opening displacement value CTOD value of a welded metal is defined as $\delta_{WM}$, a CTOD value of a weld heat-affected zone is defined as $\delta_{HAZ}$, and a CTOD value of the steel is defined as $\delta_{BM}$, wherein the CTOD values are fracture toughness values measured by a CTOD test at a test temperature of 0°C following formulae 3 and 4 may be satisfied.

$$0.8 \leq \delta_{BM} / \delta_{WM} \leq 1.25 \quad \text{......(Formula 3)}$$

$$0.15 \leq \delta_{HAZ} / \delta_{WM} \leq 1.1 \quad \text{......(Formula 4)}$$

(4) A steel for electron-beam welding according to another aspect of the invention is a steel for an electron-beam, welding, the steel consisting of a composition, by mass%, C: 0.02% to 0.10%, Si: 0.05% to 0.30%, Mn: 1.5% to 2.5%, Al: more than 0.004% to 0.05% or less, Ti: 0.005% to 0.015%, N: 0.0020% to 0.0060%, Nb: 0% to 0.004%, V: 0% to 0.030%, Cr: 0% to 0.50%, Mo: 0% to 0.50%, Cu: 0% to 0.25%, Ni: 0% to 0.50%, B: 0% to 0.0030%, Ca: 0% to 0.0050%, P: limited to 0.015% or less, S: limited to 0.010% or less, O: limited to 0.0035% or less, Mg: limited to 0.0002% or less and a balance consisting of iron and unavoidable impurities, wherein an index value CeEBB obtained by substituting the composition of the steel into a following Formula 1 is 0.42% to 0.65%, a number of inclusion particles having an equivalent circle diameter of 1.0 μm or more measured by using FE-SEM is 20 pieces/$mm^2$ or less at a thickness center portion in a cross-section along a thickness direction of the steel, and a number of nitride particles containing Ti of 10% or more and having an equivalent circle diameter or 0:05 μm or more and less than 0.5 μm measured by using FE-TEM at a magnification of 1000-fold to1000000-fold is $1 \times 10^3$ pieces/$mm^2$ or more and less than $5\times10^4$ pieces/$mm^2$ at the thickness center portion, a C/CeEBB, which is a ratio of an amount of C relative to the index value CeEBB of hardenability after the electron-beam welding, is 0.02 to 0.15,

$$CeEBB=C+(1/4)Mn+(1/15)Cu+(1/15)Ni+(1/5)Cr+(1/5)Mo+(1/5)V$$

......(Formula 1)

where C, Mn, Cu, Ni, Cr, Mo, and V represent amounts in mass% of each element contained in the composition of the steel.

(5) In the steel for electron-beam welding according to (4), the steel may have a thickness of 45 to 150 mm.

(6) A manufacturing method according to the other aspect of the invention is a method of manufacturing the steel for the electron-beam welding according to any one of the above (4) to (5), the method including, a casting process of casting and cooling the steel so that a cooling rate in a temperature range of 1300°C to 1100°C is 9 to 30°C/min and a process of heating the steel to a temperature range of 950°C to 1150°C after the casting process, and thereafter thermomechanical-treating the steel.

In order to secure a predetermined CTOD value (fracture toughness value) in the electron-beam welded joint, it is important to appropriately balance the fracture toughness values of the steel (BM), the welded metal (WM), and the heat-affected zone (HAZ).

In other words, even if the fracture toughness of the steel (base metal) and the fracture toughness of the heat-affected zone are excellent, the welded metal acts as the starting point of fracture when the fracture toughness of the welded metal is insufficient. Further, even if the fracture toughness of the welded metal is excellent, the heat-affected zone acts as the starting point and the fracture propagates when the fracture toughness of the heat-affected zone is insufficient. As described above, when the fracture toughness is uneven at portions of the welded joint, the fracture toughness of the welded joint as a whole deteriorates.

In the welded portion (the welded metal and the heat-affected zone) of the steel which has a yield strength of 355 MPa grade and to which the electron-beam welding is applied, since coarse ferrite at grain boundary formed in the vicinity of prior austenite grain, upper bainite with lath shape formed in the prior austenite grain, ferrite side plate, and the like act as the starting point of fracture, brittle fracture occurs.

A unit of fracture surface at the time when the brittle fracture occurs from the upper bainite or the coarse ferrite formed from the grain boundary of the prior austenite as the starting point is dependent upon the grain diameter of the prior austenite. Thus, the fracture toughness of the welded portion can be improved by reducing the grain diameter of the prior austenite in the welded metal and the heat-affected zone by using the pinning effect of precipitates or intra-granular transformation.

On the basis of the facts described above, according to the present invention, an appropriate amounts of Al and Ti are added to steel so as to form fine Ti nitrides in not only the steel (base metal) but also the prior austenite grain in the welded metal (WM) and the heat-affected zone (HAZ) of the welded portion which is welded by electron-beam welding with an insert metal which contains Ni being interposed therebetween. With the electron-beam welding employing the low amount of heat inputted, the fine Ti nitrides remains in the heat-affected zone to function as pinning particles that suppress the grain growth. Thus, the grain growth in the heat-affected zone is suppressed, whereby the fracture toughness improves.

Further, the fine Ti nitrides act as nuclei for intra-granular transformation to form intra-granular ferrite in the heat-affected zone. The Ti nitrides are particles including nitrides containing 10% or more of Ti, and are mainly TiN but include composites with oxides or sulfides and the like. As a result, in particular, the structure of the heat-affected zone is refined, and the fracture toughnesses of the steel (base metal), the heat-affected zone, and the welded metal improve while the balance between these three fracture toughnesses improves. According to the present invention, since more than 0.004% of A1 is added, a number of oxide-based fine inclusion particles is very low.

Advantageous Effects of Invention

According to the present invention, it is possible to suppress the deterioration in the fracture toughnesses of a welded metal and a heat-affected zone of an electron-beam welded joint which is formed in a manner that a welded portion of a steel with a yield strength of 355 MPa grade is welded by electron-beam welding with an insert metal which contains Ni being interposed therebetween. Further, it is possible to provide an electron-beam welded joint in which the fracture toughnesses of the steel (base metal), the heat-affected zone and the welded metal are appropriately balanced, and to provide the steel used for forming the welded joint at a low cost.

Brief Description of the Drawings

FIG. 1 is a diagram qualitatively illustrating a relationship between strength, toughness and a microstructure of a steel.

FIG. 2A is a diagram qualitatively illustrating a relationship between hardenability and grain diameter of a welded metal.

FIG. 2B is a diagram qualitatively illustrating a relationship between hardenability and the amount of high-carbon martensite in a heat-affected zone.

FIG. 3 is a diagram qualitatively illustrating a relationship between a ratio of hardness of the welded metal relative to hardness of the steel (base metal) and a fracture toughnesses of the welded metal and the heat-affected zone.

FIG. 4 is a diagram qualitatively illustrating a relationship between CeEBB and a fracture toughness value ($\delta_c$) of the welded metal and the heat-affected zone.

FIG. 5 is a diagram qualitatively illustrating a relationship between the fracture toughness value of the heat-affected zone and C/CeEBB.

FIG. 6 is a diagram illustrating a test piece having a notch.

FIG. 7 is a diagram illustrating a relationship between results of a CTOD test applied to the welded joint and the number of inclusions (fine Ti nitrides and coarse inclusion particles) contained in the steel.

FIG. 8A is a diagram illustrating a correlation between the cooling rate of a slab and the number of fine Ti nitrides contained in the steel.

FIG. 8B is a diagram illustrating a correlation between the cooling rate of a slab and the number of coarse inclusion particles contained in the steel.

Description of Embodiments

When the tower of a wind power generator is constructed at sea, the steel after being welded is used as it is without applying any thermal treatment to the joint portion. Thus, the welded metal and the heat-affected zone are required to have excellent toughness. According to the present invention, in order to enhance the toughness of the welded metal to be equivalent to that of the steel (base metal), an electron-beam welding is performed with an insert metal which contains Ni being interposed into a welded portion.

Conventionally, the electron-beam welding has been used, for example, for a high-strength steel containing a large amount of Cr or Mo (so-called Cr-Mo high-strength steel), a stainless steel, or high-Ni steel, to which formation of oxides of the welded metal is viewed with suspicion. A brittle phase is not formed in the heat-affected zone of the stainless steel. Further, in the case of Cr-Mo high-strength steel, the structure of the heat-affected zone is made of lower bainite having excellent toughness as qualitatively illustrated in FIG. 1, and an extremely high toughness can be obtained.

The thickness and the strength of the steel used for the electron-beam welded joint according to the embodiment of the present invention are not particularly limited. However, it is preferable to use, for example, a steel for a structure used, for example, for the tower of a wind power generator at sea and having a thickness in the range of 45 mm to 150 mm, YP (yield point) in the range of approximately 315 MPa to 550 MPa, and TS (tensile strength) in the range of approximately 450 MPa to 690 MPa.

Depending on application, the upper limit of the thickness may be set to 120 mm or 130 mm. The lower limit of YP may be set to 340 MPa or 355 MPa, and the upper limit of YP may be set to 500 MPa, 460 MPa, or 420 MPa. The lower limit of TS may be set to 470 MPa or 490 MPa, and the upper limit of TS may be set to 600 MPa, 570 MPa, or 550 MPa.

This type of steel has strength lower than that of the Cr-Mo high-strength steel. Further, the structure of the heat-affected zone is an upper bainite having reduced toughness as qualitatively illustrated in FIG 1. When this steel is subjected to the electron-beam welding, a coarsened structure such as ferrite at grain boundary or upper part bainite develops particularly in the heat-affected zone, and the high-carbon martensite (also referred to as island martensite or M-A constituent) is likely to be formed. Thus, in the case where the electron-beam welding is applied to the steel for a structure, it is not easy to secure the toughness of the heat-affected zone.

As for the relationship between the structure and the toughness, it is known that a reduction in the grain diameter is particularly effective in improving the toughness of the welded metal, and the high-carbon martensite reduces the toughness particularly of the heat-affected zone. Further, as for the relationship between the composition and the structure, it is known that, by increasing the hardenability index Ceq, the grain diameter of the welded metal reduces as illustrated in FIG. 2A, and the high-carbon martensite of the heat-affected zone increases as illustrated in FIG. 2B.

Further, in order to enhance the toughness of the welded metal and the heat-affected zone, the balance between the hardness of the welded metal and the hardness of the steel (base metal) is important. In other words, as illustrated in FIG. 3, the toughness of the welded metal improves with the increase in the hardness of the welded metal relative to the hardness of the steel (base metal). However, a deformation concentrates on the heat-affected zone due to the effect of the increase in the hardness of the welded metal, which results in a decrease in the toughness of the heat-affected zone. For these reasons, if the hardenability is increased to prevent formation of the upper bainite having less toughness, the welded metal hardens, which causes a problem of deterioration in the toughness of the heat-affected zone.

As described above, the relationship between the hardenability of the steel and the grain diameter of the WM or high-carbon martensite of the HAZ, and the relationship between the ratio of the hardness of the WM relative to the hardness of the steel (base metal) and the toughness of the welded joint are qualitatively known. However, conventionally, the idea of controlling the balance of the fracture toughness of the welded joint using the composition of the steel has not been conceived. Thus, for example, in the case where the electron-beam welding is applied to the steel (base metal) having enhanced hardenability, a problem of significantly deteriorating the toughness of the HAZ occurs although the toughness of the WM improves.

In view of the facts described above, the present inventors made a study of indexes indicating the hardenability suitable for the electron-beam welding in order to obtain an excellent toughness in the electron-beam welded joint which is formed with an insert being interposed, and found and newly introduced "index value of hardenability for electron-beam welding, CeEBB and CeEBW". More specifically, the "index value of hardenability for electron-beam welding, CeEBB" given by the following Formula 1 and the "index value of hardenability after electron-beam welding, CeEBW" given by the following Formula 2 are new indexes which are obtained by focusing the hardenability that largely affects the formation of the structure of the steel and by considering the formation of a desired structure reliably in order to further enhance the fracture toughness of the electron-beam welded joint.

$$CeEBB = C + (1/4)Mn + (1/15)Cu + (1/15)Ni + (1/5)Cr + (1/5)Mo + (1/5)V \quad \text{......(Formula 1)}$$

where C, Mn, Cu, Ni, Cr, Mo, and V represent amounts (mass%) of each element contained in the composition of the base metal of the electron-beam welding joint, i.e. the steel used for the electron-beam welding joint.

$$CeEBW = C + (1/4)Mn + (1/15)Cu + (1/15)Ni + (1/5)Cr + (1/5)Mo + (1/5)V \quad \text{......(Formula 2)}$$

where, C, Mn, Cu, Ni, Cr, Mo and V represent amounts (mass%) of each element contained in the composition of the welded metal of the electron-beam welding joint. The units of the CeEBB value and the CeEBW value are mass%.

It should be noted that, in the case where any of the elements is not added to the steel, 0 may be substituted into the amount of the element for utilizing the Formula 1 and Formula 2.

For example, in the case where all of Cu, Ni, Cr, Mo, and V are not added to the steel, following Formula 1' is utilized for CeEBB instead of the above Formula 1 and following Formula 2' is utilized for CeEBW instead of the above Formula 2.

$$CeEBB = C + (1/4)Mn \quad \text{......(Formula 1')}$$

$$CeEBW = C + (1/4)Mn \quad \text{......(Formula 2')}$$

However, when Cu, Ni, Cr, Mo, and V are included as unavoidable impurities, it is preferable to calculate CeEBB and CeEBW by using the Formula 1 and the Formula 2.

CeEBB defined by the Formula 1 is an index which is obtained on the basis of the known carbon equivalent Ceq(=C+(1/6)Mn+(1/15)Cu+(1/15)Ni+(1/5)Cr+(1/5)Mo+ (1/5)V) and in consideration that the hardenability decreases with a decrease in the amount of Mn due to evaporation at the time of electron-beam welding. It should be noted that a coefficient relating to Mn is set to 1/4 on the basis of the degree of the decrease in the hardenability due to a decrease of Mn, which is experimentally obtained in case of the electron-beam welded joint which is formed with an insert metal being interposed. The value of the coefficient is larger than that in the known formula of Ceq, which is 1/6.

The index value CeEBB is an index for: (1) obtaining a desired range of the hardenability in the welded metal of the electron-beam welded joint using the foil containing Ni by controlling the composition of the steel (base metal); (2) promoting formation of fine ferrite in the welded metal; and (3) suppressing formation of the upper bainite or high-carbon martensite that reduce the toughness in the heat-affected zone after the electron-beam welding.

FIG. 4 qualitatively illustrates the relationship between the fracture toughness values ($\delta_c$) of the welded metal (WM) and the heat-affected zone (HAZ) in the electron-beam welded joint, and CeEBB. The solid line curve represents the fracture toughness value ($\delta_{cwm}$) of the welded metal, and the broken line curve represents the fracture toughness value ($\delta_{cha}$) of the heat-affected zone.

The curve illustrated in the long dashed double-short dashed line represents the fracture toughness value of the heat-affected zone (expected values of HAZ toughness) on the assumption that the change of the hardness of the WM is ignored. The expected values of the HAZ toughness can be measured, for example, through a fracture toughness test using a test piece subjected to a thermal treatment simulating a thermal history of the

HAZ.

The fracture toughness value ($\delta_{cwm}$) of the WM increases to be equivalent to that of the steel (base metal) by using the insert metal (such as a Ni foil). When the index value CeEBB increases, in the HAZ, the expected value of the HAZ toughness decreases due to the increase in the high-carbon martensite and the hardening of the HAZ. Further, with the increase in the index value CeEBB, the WM hardens, which results in a reduction in the $\delta_{cha}$ to be lower than the expected value of the HAZ toughness. In case that the Ni foil is used, if the CeEBB is lower, there is not a problem with toughness but hardness become lower, because it is necessary to define a lower limit.

As described above, with the index value CeEBB, it is possible to systematically evaluate the fracture toughnesses of the welded metal and the heat-affected zone. By setting the index value CeEBB in an appropriate range, it is possible to make the fracture toughness value of the heat-affected zone more than or equal to the target value plotted with the dot-and-dash line. In the case where the pinning particles described later are employed, the $\delta_{cha}$ improve due to the effect of the pinning or intra-granular transformation.

Next, the present inventors made a study of a relationship between the amount of C and the index value CeEBB in the steel (base metal), and the toughnesses of the base metal, the welded metal, and the heat-affected zone. As a result, it was found that the upper limit of "C/CeEBB" which is a ratio of the amount of C relative to CeEBB of the steel (base metal), should be limited. The technical meaning of the ratio "C/CeEBB" will be described below.

The ratio "C/CeEBB" is an index used for preventing the hardenability of the heat-affected zone from being undesirably unbalanced. According to the present invention, since the insert metal is used, a decrease of the hardenability of the welded metal due to a decrease of the C/CeEBB may be compensated by Ni. FIG. 5 illustrates a relationship between CeEBB and the fracture toughness value of the heat-affected zone.

Since the CeEBB is an index relating to the hardenability, with the increase in CeEBB, the fracture toughness value of the heat-affected zone decreases due to the promotion of the formation of the high-carbon martensite. Thus, as shown in FIG. 5, in order to secure the fracture toughness value, the C/CeEBB, should be limited.

The present inventors studied the appropriate composition of the welded metal of the welded joint welded by electron-beam welding with the insert metal which contains Ni being interposed. Since Ni from the insert metal containing Ni is added to the welded metal, it is necessary to clarify an appropriate amount ofNi and an appropriate CeEBB in order to ensure the toughness in the welded metal.

The present inventors further made a study of a method of improving the balance between the fracture toughness value of the welded metal and the fracture toughness value of the heat-affected zone and obtained a following result. (1) Since a heat input of the electron-beam welding is low, more Ti nitrides remain. (2) The Ti nitrides act as the pinning particle and suppress the grain growth in the heat-affected zone, and effectively act as nuclei for intra-granular transformation and accelerate a formation of intra-granular ferrite. It was found that, as a result of these effects, the Ti nitrides improve the fracture toughness of the heat-affected zone and the welded metal of the electron-beam welded joint formed with the insert metal which contains Ni being interposed.

Furthermore, the present inventors carried out preliminary tests in order to verify the influence of the size or number of inclusion particles in steel such as Ti nitrides or oxides on the fracture toughness value of the electron-beam-welded joint. As described below in detail, in the preliminary tests, plural steels having the inclusion particles of different numbers or sizes were produced by changing the total amount of oxygen in the steel or the cooling rate of slabs. Electron-beam welded joints were manufactured using the above steels, and the fracture toughness values were investigated.

In the preliminary tests, the inclusion particles, such as the nitrides and the oxides, and the fracture toughness value were measured in thickness center portion along thickness direction of steel plate. The reasons are as follows.

The first reason is that, at the thickness center portion, restraint intensity is mechanically highest and the fracture may be initiated, as confirmed in CTOD test in the electron-beam-welded joint. Moreover, in the thickness center portion of the steel plate, solute elements are concentrated and the structure is likely to be hardened due to solidification segregation (center segregation) during continuous casting. Thus, the second reason is that, at the thickness center portion, brittle fracture may easily occur metallurgically as compared to a portion near surface layer along the thickness direction. Furthermore, in the electron-beam-welded joint which is the target of the invention and which is different from a general arc-welded joint, fused face is planar and roughly parallel with the thickness direction, so that coarse inclusion particles act as the starting point of the brittle fracture due to the above mentioned mechanical and metallurgical influence in the thickness direction. Thus, the third reason is that the fracture toughness values of the heat-affected zone and the welded metal of the electron-beam-welded joint may be influenced significantly by the size or number of the inclusion particles which exist in the thickness center portion as compared to the general arc-welded joint.

As a result of investigating the relationship between the number of the oxides and the inclusion particles and the fracture toughness value through the preliminary tests described below, the following findings are obtained. In the case where the inclusion particles are nitrides containing Ti of 10% or more (hereinafter, referred to simply as Ti nitrides) and an equivalent circle diameter thereof is 0.05 μm or more, the pinning effect is obtained with high efficiency and the intra-granular transformation is promoted, which contributes significantly to the grain refinement. On the other hand, inclusion particles having a relatively large grain diameter act as the starting point of the brittle fracture regardless of the amount of Ti. Since the inclusion particles tend to act as the starting point of the brittle fracture when the equivalent circle diameter of the inclusion particles is more than 0.5 μm and tend notably to act as the starting point of fracture in particular when the equivalent circle diameter is 1.0 μm or more, it is preferable that the number thereof is limited as low as possible. In addition, it was found that the grain refinement could be effectively achieved without causing the brittle fracture when an appropriate amount of the nitrides containing Ti of 10% or more and having an equivalent circle diameter of 0.05 μm or more and less than 0.5 μm was contained in the steel.

In the preliminary tests, among particles in the steel, the numbers were measured for two classes of (1) nitrides containing Ti of 10% or more and having the equivalent circle diameter of 0.05 μm or more and less than 0.5 μm (hereinafter, also referred to simply as "fine Ti nitrides") and (2) all of non-metallic inclusion particles having the equivalent circle diameter of 1.0 μm or more such as the nitrides and the oxides (hereinafter, also referred to simply as "coarse inclusion particles"). The relationship between the numbers of particles of the respective classes in the steel and the toughness value of the joint after electron-beam welding using the steel was quantitatively confirmed.

In the preliminary tests, slabs which intend to include, by mass%, C: 0.07%, Si: 0.06%, Mn: 2.0%, P: 0.007%, S: 0.002%, Ti: 0.01%, Al: 0.04%, and N: 0.005% were manufactured using a laboratory-scale furnace. When manufacturing the slabs, the following two processes were controlled in order to control the numbers of inclusions of the respective classes. (i) The total amount of oxygen of the slab was adjusted by changing a treatment time of vacuum degassing of molten steel. (ii) During casting, the cooling rate of the slab in a temperature range of 1300°C to 1100°C was controlled to a range of 1 °C/min to 30 °C/min by adjusting a cooling water flow for cooling the slab. The compositions of the respective slabs manufactured in the preliminary tests approximately coincided with the target value of the above composition. In addition, the total amounts of oxygen of the respective manufactured slabs were 11 ppm to 31 ppm. Steel plates having a plate thickness of 50 mm were manufactured through ACC described below using the obtained slabs.

The number of particles in the steels described above was measured through the method used in Examples described later.

Further, electron-beam welding was applied to the steels and the Ni foil is interposed into groove face so that a concentration of Ni in the welded metal becomes 2% in order to manufacture an I-groove butt-welded joint. Details of the welding will be described in Examples below. CTOD test pieces having a notch formed at a fusion line (FL) zone of the welded joint were manufactured, and CTOD tests were performed at a test temperature of 0°C. The sample was determined to be acceptable when HAZ fracture toughness value $\delta_{HAZ}$ which was obtained by the test was 0.2 mm or more, and the other samples were determined to be unacceptable. FIGs. 7, 8A, and 8B show the results of the preliminary tests. In FIGs., hollow marks represent samples determined to be acceptable in the CTOD tests, and solid marks represent samples determined to be unacceptable.

FIG. 7 illustrates a relationship between the results of the CTOD tests and the numbers of the fine Ti nitrides and the coarse inclusion particles. In FIG. 7, all the marks (hollow marks) of the welded joint determined to be acceptable in the CTOD tests exist within a squared range with a broken line indicated as "range according to the present invention". More specifically, samples in which CTOD value of HAZ, $\delta_{HAZ}$ was 0.2 mm or more satisfied the conditions of (1) the number of particles (the coarse inclusion particles) having the equivalent circle diameter of 1.0 μm or more was 20 pieces/mm$^2$ or less at the thickness center portion of the steel and (2) the number of nitrides containing Ti of 10% or more and having the equivalent circle diameter of 0.05 μm or more and less than 0.5 μm (the fine Ti nitride particles) was $1 \times 10^3$ pieces/mm$^2$ or more at the thickness center portion.

Next, a study was made of a correlation between the cooling rate for the slabs in the temperature range of 1300°C to 1100°C and the number of the fine Ti nitride particles. As shown in FIG. 8A, the number of the fine Ti nitride particles in the thickness center portion tends to increase with the increase in the cooling rate. In particular, the number of the inclusion particles tends apparently to increase depending on the cooling rate when the cooling rate of the slab is 9 °C/min or more. As a result, within the above-described range of the cooling rate, it was possible to control the number of the fine Ti nitride particles to be in the range of $1 \times 10^3$ pieces/$mm^2$ or more. In FIG 8A, the cooling rate range is indicated with the broken line and the arrow as "range according to the present invention". Further, all the samples that satisfied the above-described range of the cooling rate have the CTOD value of HAZ, $\delta_{HAZ}$ of 0.2 mm or more (hollow marks).

Next, a study was made of a correlation between the cooling rate for the slabs in the temperature range of 1300°C to 1100°C and the number of the coarse inclusion particles. As shown in FIG 8B, the number of the coarse inclusion particles in the thickness center portion tends to decrease with the increase in the cooling rate. In particular, in the samples in which the cooling rate of the slab was 9 °C/min or more, the number of the coarse inclusion particles was in the range of 20 pieces/$mm^2$ or less. In FIG. 8B, the cooling rate range is indicated with the broken line and the arrow as "range according to the present invention".

On the basis of all the results of the preliminary tests, the present inventors obtained the following findings. It is possible to improve the fracture toughness of the heat-affected zone and the welded metal of the electron-beam welded joint, by (1) reducing the number of the coarse inclusion particles existing at the thickness center portion, and (2) appropriately controlling the number of the fine Ti nitride particles acting as the nuclei for the intra-granular transformation. Further, it is effective to (3) control the cooling rate for the steel during casting to be in the appropriate range in order to control the size and the number of the inclusion particles. In addition, it is considered that the required cooling rate for the slabs of 9 °C/min, which is obtained through the preliminary tests, may vary depending on the conditions of equipment of ladle refining and casting in steel mill where the steel is melted and cast (for example, degree of vacuum of the vacuum degassing, and shapes of weir for casting). Thus, in order to improve the CTOD test results, it is necessary to obtain a predetermined number of the inclusion particles in predetermined composition ranges, and to limit the cooling rate during casting to 9 °C/min or more.

On the basis of the results of the preliminary tests described above, according to the present invention, the amount of C, the CeEBB, the CeEBW, the C/CeEBB, and the size and the number of the inclusion particles in the steel (base metal) are controlled to be in the appropriate range, and an appropriate amounts of Al, Ti, and the like are added. Thereby, it is possible that the fine Ti nitrides are utilized as the pinning particles and the nuclei for intra-granular transformation during the electron-beam welding with the insert metal which contains Ni being interposed into the welded portion, the ratio of the fracture toughness value of the welded metal and the heat-affected zone relative to the fracture toughness value of the steel (base metal) is controlled to the appropriate range, and the electron-beam-welded joint in which unevenness in the fracture toughness value $\delta c$ is sufficiently suppressed and the steel which can form the above welded joint are obtained.

The steel according to the embodiment of the present invention as defined in claim 1 contains, by mass%, C: 0.02% to 0.1%, Si: 0.03% to 0.30%, Mn: 1.5% to 2.5%, Al: more than 0.004% to 0.05% or less, Ti: 0.005% to 0.015%, and N: 0.0020% to 0.0060%.

In addition, among unavoidable impurities included in the composition of the steel, it is necessary that P is limited to 0.015% or less, S is limited to 0.010% or less, and O is limited to 0.0035% or less.

In addition, as necessary, the steel may include Nb: 0% to 0,004%, V: 0% to 0.030%, Cr: 0% to 0.50%, Mo: 0% to 0.50%, Cu: 0% to 0.25%, Ni: 0% to 0.50%, B: 0% to 0.0030%, and Ca: 0% to 0.0050%.

Meanwhile, the amount of Mg in the unavoidable impurities is limited to 0.0002% or less.

The balance of the composition of the steel consists of iron and the unavoidable impurities.

In a case in which the welded portion of the steel is electron-beam welded in a state in which the insert metal containing Ni is inserted therein, in the welded metal, amount of Mn and O decrease and an amount of Ni increases. As a result, the welded metal according to claim 1 contains by mass%, a C: 0.02% to 0.1%, Si: 0.03% to 0.30%, Mn: 1.2% to 2.4%, Al: more than 0.004% to 0.05% or less, Ni: 1.0% to 2.3%, Ti: 0.005% to 0.015% and N: 0.0020% to 0.0060%. In addition, among unavoidable impurities included in the composition of the welded metal, it is necessary that P is limited to 0.015% or less, S is limited to 0.010% or less, and O is limited to 0.0020% or less. In addition, as necessary, the welded metal may include Nb: 0% to 0,004%, V: 0% to 0.030%, Cr: 0% to 0.50%, Mo: 0% to 0.50%, Cu: 0% to 0.25%, B: 0% to 0.0030% and Ca: 0% to 0.0050%. A balance of the composition of the steel consists of iron and the unavoidable impurities.

Hereinafter, the reason for adding elements and the amounts of the elements will be described. Here, the unit "%" represents mass%.

C is an element that contributes to improving the strength. In order to ensure the strength necessary for the welded structure, C of 0,02% or more is added. The preferable lower limit is 0.03% and more preferable lower limit is 0.04%. On the other hand, when the amount of C is more than 0.10%, the hardenability excessively increases, and the toughness deteriorates. Thus, upper limit is to be 0,10%. The preferable upper limit is 0.08% or 0.07%, and more preferable upper limit is 0.06%.

Si is a deoxidizing element and an element that is effective in ensuring the strength of the steel plate. Thus, Si of 0.03% or more is added. However, when Si is excessively added, an excessive amount of martensite-austenite constituent is formed, and the toughnesses of the welded metal and the heat-affected zone deteriorate in particular. Thus, upper limit is to be 0.30%. The preferable upper limit is 0.25% or 0.20%, and more preferable upper limit is 0.15%.

Mn is an element that is effective in ensuring the toughness and the strength of the steel plate owing to enhancing the hardenability. When the amount of Mn is less than 1.5%, it is not possible to sufficiently obtain the toughness, strength, and hardenability of the steel. In addition, since some of Mn included in the welded metal evaporates during the electron-beam welding, the hardenability of the welded metal deteriorates. Thus, in order to ensure the toughness, strength and hardenability of the steel and to ensure the hardenability of the welded metal, Mn of 1.5% or more is added.

The preferable lower limit of the amount of Mn is 1.6% or 1.7%, and more preferable lower limit is 1.8%. On the other hand, when the amount of Mn is more than 2.5%, the hardenability excessively increases, and the toughness of the heat-affected zone deteriorate in particular. Thus, the upper limit of the amount of Mn is to be 2.5%. The preferable upper limit is 2.4%, and more preferable upper limit is 2.3%.

P is an unavoidable impurity and has an adverse effect on the toughnesses of the steel (base metal: BM), the welded metal (WM), and the heat-affected zone (HAZ). In particular, in order to ensure the toughness of the heat-affected zone (HAZ), it is preferable to reduce the amount of P. Thus, the amount of P is limited to 0.015% or less. The preferable amount of P is 0.010% or less or 0.006% or less. It is not necessary to limit the lower limit of the amount of P in particular, and the lower limit thereof is 0%. However, in consideration of the manufacturing cost, the excessively low amount of P of less than 0.001% is not necessary, and the amount of P may be 0.001% or more.

S is an unavoidable impurity and forms MnS. MnS precipitates from the fine Ti nitride particles such as TiN as nuclei, Mn-dilute region is formed, and thereby, the formation of the intra-granular ferrite (intra-granular transformation) is promoted. In order to promote the intra-granular transformation, it is preferable that the amount of S is 0.0001% or more. The preferable lower limit of the amount of S is 0.001%. As necessary, the lower limit of the amount of S may be 0.002%. Moreover, the lower limit of the amount of S may not be limited, and the lower limit may be 0%. On the other hand, when S is excessively added, the toughness of the heat-affected zone (HAZ) deteriorates in particular. Thus, the amount of S is limited to 0.010% or less. The preferable upper limit of the amount of S is 0.007% or 0.005%.

Al is an important deoxidizing element in the present invention. Since Al suppresses the excess formation of Ti oxides and precipitates the fine TiN, Al of more than 0.004% is added. The preferable lower limit is 0.010% or 0.020%. On the other hand, when the amount is more than 0.05%, Al oxides, which act as the starting point of fracture, are formed, and the toughness deteriorates. Thus, the upper limit is to be 0.05%. In order to enhance the toughness of the heat-affected zone (HAZ), it is preferable that the upper limit is 0.04% or 0.03%.

Ti is a very important element in the present invention. Ti forms the fine Ti nitrides (TiN) by bonding to N. The Ti nitrides may include elements except Ti and N. In the electron-beam welding joint with low heat input, grain coarsening of the austenite in the heat-affected zone (HAZ) is suppressed by the pinning effect of the fine Ti nitrides. Moreover, the fine TiN functions as the nuclei for the intra-granular transformation and contribute to the improvement of the toughness of the heat-affected zone (HAZ).

In order to sufficiently obtain the above addition effects, Ti of 0.005% or more is added. It is preferable that the lower limit of the amount of Ti is 0.007% or 0.009%. On the other hand, when the amount of Ti is excessive, coarse Ti-containing inclusion particles are formed, and the toughness deteriorates. Thus, the upper limit of the amount of Ti is to be 0.015%. The preferable upper limit of the amount of Ti is 0.014% or 0.012%.

N which forms the fine Ti nitrides by bonding to Ti is a very important element. In particular, the toughness of the heat-affected zone are enhanced by the preventing the grain coarsening derived from the pinning effect of the fine Ti nitrides and by the grain refinement derived from the intra-granular transformation. Thus, the lower limit of the amount of N is to be 0.0020%. The preferable lower limit is 0.0030% or 0.0035%. On the other hand, when the amount of N is excessive, the toughnesses of the steel (base metal) and the heat-affected zone deteriorate. Thus, the upper limit of the amount of N is to be 0.0060%. The preferable upper limit of the amount of N is 0.0050% or 0.0040%.

O is an impurity and it is preferable to reduce the amount thereof. When the amount of O is excessive, oxides, which act as the starting point of fracture, are excessively formed, and the toughness of the steel and the heat-affected zone are adversely influenced. Thus, the upper limit of the amount of O is to be 0.0035%. In the case where the excessive amount of the oxides are easily formed in the steel under conditions of the composition, the manufacturing processes, and the like, the upper limit of the amount of O may be 0.0032% or less, 0.0029% or less, and 0.0025% or less. It is not necessary to define the lower limit of the amount of O, and the lower limit of the amount of O may be 0%. On the other hand, when the amount of Al which is the deoxidizing element is insufficient, fine Ti oxides are formed in the case where a certain amount of O is contained, and act as the nuclei for the intra-granular transformation in the heat-affected zone, and thereby, the toughness is improved. Thus, it is preferable that the lower limit of the amount of O is 0.0010%.

It should be noted that, by applying the electron-beam welding according to the embodiment of the present invention under general conditions, approximately half of the amount of O in the steel may dissipate from the welded metal in some cases. For example, when the amount of O in the steel is 0.0035% or less, the amount of O in the welded metal of the welded joint after welding may be approximately 0.0020% or less in some cases. Thus, the lower limit of the amount of O in the steel (base metal) is preferably 0.0015%, and is more preferably 0.0020%.

The steel according to the embodiment of the present invention may further include a predetermined amount of Nb and/or V for the following reasons.

Nb is an element that is effective in improving the hardenability and the strength of the steel (base metal). Although addition of Nb is not indispensable, Nb may be added as necessary. In order to obtain the addition effect, Nb of 0.001% or more is added. It is preferable that Nb of 0.003% or more is added. However, when Nb is excessively added, the toughness of the heat-affected zone (HAZ) deteriorates in particular. Thus, the upper limit of the amount of Nb is 0.004% in the case where high toughness is required in particular. It is not necessary to limit the lower limit of the amount of Nb in particular, and the amount of Nb may be 0%.

V is an element that is effective in improving the hardenability and temper softening resistance with small amount of addition. Although addition of V is not indispensable, V may be added as necessary. In order to obtain the addition effect, V of 0.005% or more is added, and preferably, V of 0.010% or more is added. However, when V is excessively added, in particular, the toughness of the heat-affected zone (HAZ) deteriorates. Thus, the upper limit of the amount of V is to be 0.030%. The preferable upper limit is 0.025%, and more preferable upper limit is 0.020%. It is not necessary to limit the lower limit of the amount of V in particular, and the amount of V may be 0%.

The steel according to the embodiment of the present invention may further include at least one of Cr, Mo, Cu, Ni, and B as necessary. Although addition of the elements is not indispensable, the addition is effective in improving the hardenability and the strength. In order to obtain the effect, at least one of Cr, Mo, Cu, and Ni of 0.05% or more are respectively added.

B is an element that significantly improves the hardenability with small amount of addition. In the case where securement of the cooling rate and the like is difficult, B whose upper limit is 0.0030% may be added as necessary. In order to obtain the improvement effect of the hardenability, B of 0.0002% or more may be added. In order to prevent the steel from cracking or the like due to the addition of B, the upper limit of the amount of B may be limited to 0.0020%, 0.0017% or 0.0014%.

In addition, since Cr, Mo, Cu and Ni are expensive, the amounts of the addition are to be Cr of 0.50% or less, Mo of 0.50% or less, Cu of 0.25% or less, and Ni of 0.50% or less, from an economic standpoint. In particular, in the steel with large amount of Mn according to the embodiment of the present invention, when the elements are added in surplus, the hardenability excessively increases, which may result in deterioration in the balance of the toughness. Thus, it is preferably that the total amount of Cr, Mo, Cu and/or Ni is 0.70% or less. It is more preferably that the total amount is 0.50% or less. The total amount may be limited to 0.40%, 0.30%, or 0.20% as necessary. It is not necessary to limit the lower limit of Cr, Mo, Cu, Ni, and B in particular, and the amounts of the addition may be 0% respectively.

In a case in which the electron-beam welding is carried out on the steel according to the embodiment of the invention, the amount of Mn and the amount of O in the welded metal become smaller than the amount of Mn and the amount of O in the steel (base metal). This is because, when the electron-beam welding is carried out in a vacuum, in the welded metal, some of Mn evaporates and oxides emerges from the welded metal and are exhausted. Therefore, the amount ofMn and the amount of O in the welded metal are set to, by mass%, Mn: 1.2% to 2.4% and O: 0.0020% or less, respectively. The lower limit of the amount of Mn of the welded metal may be 1.4% or 1.6%, and the upper limit thereof may be 2.0% or 1.8%.

Meanwhile, when electron-beam welding is carried out under ordinary conditions according to the embodiment of the invention, approximately half the amount of O in the steel is often lost in the welded metal. For example, when the amount of O in the steel is 0.0035% or less, the amount of O in the welded metal often becomes 0.0020% or less in the welded joint. The amount of O in the welded metal may be less than 20 ppm, 19 ppm or less, 18 ppm or less or 17 ppm or less. Although it is not necessary to provide the lower limit of the amount of O in the welded metal, the lower limit may be 4 ppm or more, 8 ppm or more, 10 ppm or more, 12 ppm or more or 14 ppm or more.

In the steel of the present invention, when forming the electron-beam welded joint, to increase the toughness of the welded metal, an insert metal containing Ni is inserted between the groove surfaces of the welded portion (groove surface butting portion), and Ni is added to the welded metal. In order to significantly increase the toughness of the welded metal, preferably, to set the fracture toughness value of the welded metal to 0.8 times that of the steel (base metal), it is necessary to set the amount of Ni in the welded metal to 1.0% or more. The lower limit of the amount of Ni in the welded metal may be 1.3% or 1.6%.

On the other hand, the amount of Ni becomes excessive, the hardness of the welded metal increases, and the fracture toughness of the heat-affected zone is adversely influenced. Particularly, in order to ensure the toughness of the heat-affected zone, the upper limit of the amount of Ni is set to 2.3% or less. Meanwhile, when the welded metal contains excess Ni, high-carbon martensite is liable to be generated, and the hardness of the welded metal may increase, and the fracture toughness may degrade. The upper limit of the amount of Ni in the welded metal may be 2.2% or 2.0%.

In a case in which the amount of Ti and N, which are added to increase the toughness of the welded metal using the pinning effect, is small, it is preferable to increase the amount of Ni in the welded metal. As the insert metal, a Ni alloy or pure Ni may be used. Use of pure Ni is simple.

In the electron-beam welded joint according to the embodiment of the present invention, the index value CeEBB is obtained by assigning the composition of the steel (base metal) to the following formula 1, and the index value CeEBB is set to 0.42% to 0.65%.

In the steel according to the embodiment of the present invention, an index value obtained by assigning the composition of the steel to the same Formula 1 is used as CeEBB, and the index value CeEBB is set to 0.42% to 0.65%. Meanwhile, "%" represents mass%.

$$CeEBB=C+(1/4)Mn+(1/15)Cu+(1/15)Ni+(1/5)Cr+(1/5)Mo+(1/5)V \quad \text{.....(Formula 1)}$$

where; C, Mn, Cu, Ni, Cr, Mo and V represent amounts (mass%) of each element contained in the composition of the steel. The unit of the CeEBB value is mass%.

The index value of hardenability after electron-beam welding, CeEBB is manufactured in consideration that the amount of Ni is set to 1.0% to 2.3% in the welded metal of the electron-beam welded joint formed with the insert metal which contains Ni being interposed into the welded portion.

The lower limit of the index value of hardenability after electron-beam welding, CeEBB of the steel (base metal) is set to 0.42% in order to ensure the strength of the steel (base metal). The CeEBB is preferably set to 0.45% or more, and more preferably set to 0.48% or more. On the other hand, when CeEBB exceeds 0.65%, since the fracture toughness of the heat-affected zone becomes insufficient, the upper limit is set to 0.65%. The upper limit is preferably 0.60%, and more preferably 0.58%.

According to the steel of the embodiment of the present invention, the number of the inclusion particles (coarse inclusion particles) having the equivalent circle diameter of 1.0 μm or more is to be 20 pieces/$mm^2$ or less at the thickness center portion in a cross-section along the thickness direction. In addition, also at the thickness center portion, the number of the nitride particles containing 10% or more of Ti and having the equivalent circle diameter of 0.05 μm or more and less than 0.5 μm (fine Ti nitride particles) is to be $1 \times 10^3$ pieces/$mm^2$ or more. When the number of the coarse inclusion particles is more than 20 pieces/$mm^2$, the coarse inclusion particles act as the starting points of the fracture, and the fracture toughnesses of the heat-affected zone and the welded metal are insufficient. When the number of the fine Ti nitride particles is less than $1 \times 10^3$, the pinning effect derived from the Ti nitride particles is insufficient, and the toughnesses of the heat-affected zone and the welded metal are adversely influenced. On the other hand, Ti nitrides of 0.05 μm or more and less than 0.5 μm may act as the starting point of the brittle fracture when fine Ti nitrides are excessive. Thus, in order to stabilize the toughness of the heat-affected zone, the upper limit of the number of fine Ti nitrides at the thickness center portion is less than $5 \times 10^4$ pieces/$mm^2$, and more preferably $4 \times 10^4$ pieces/$mm^2$ or less.

Moreover, the number of coarse inclusion particles is measured, by using test pieces taken from the thickness center portion in the cross-section along the thickness direction of the steel and by using FE-SEM (Field Emission Scanning Electron Microscope).

Moreover, the number of fine Ti nitride particles is measured, for example, by using test pieces taken from the thickness center portion in the cross-section along the thickness direction of the steel and by using FE-TEM (Field Emission Transmission Electron Microscope). Furthermore, extracted replica films are prepared and observed by using TEM, and particles containing Ti of 10 mass% or more, which is measured by using EDX (Energy Dispersive X-ray Spectrometry), are judged as nitride particles containing Ti of 10% or more.

The ratio (C/CeEBB) of the amount of C of the steel (base metal) relative to the index value of hardenability for electron-beam welding, CeEBB of the steel (base metal) is an index which expresses a balance between the hardenability of the welded metal and the hardenability of the heat-affected zone and the steel (base metal). The C/CeEBB is 0.15 or less. If the amount of C is excessive against the amounts of Mn, Cu, Ni, Cr, Mo, and/or V and the C/CeEBB become more than 0.15, the toughness of the heat-affected zone may deteriorate. More preferable upper limit of the C/CeEBB is 0.13 and further more preferable upper limit thereof is 0.11.

Meanwhile, in a case in which the insert metal containing Ni is inserted between the groove surfaces of a welded portion, the degradation of the hardenability of the welded metal due to a decrease in C/CeEBB of the steel (base metal) can be complemented using Ni. In a case in which the amount of C is the lower limit value, and the amounts of Mn, Cu, Ni, Cr, Mo and/or V are the upper limit values, C/CeEBB substantially becomes the lower limit, and is 0.02 in the invention.

Meanwhile, when the amount of C increases, and the amounts of Cu, Ni, Cr, Mo and/or V decrease, since the alloying costs can be reduced, the lower limit of C/CeEBB is more preferably 0.04 or more, and more preferably 0.06 or more.

In the electron-beam welded joint formed with the insert metal which contains Ni being interposed between the groove surfaces of the welded portion, the hardenability index value of the hardenability of the welded metal, CeEBW obtained using the above formula 2 is set to 0.56% to 0.73%. CeEBW of the welded metal is set to 0.56% in order to ensure the hardenability of the welded metal. The lower limit of CeEBW of the welded metal is more preferably set to 0.60%. On the other hand, when CeEBW of the welded metal exceeds 0.73%, the welded metal hardens such that the fracture toughness of the welded joint becomes insufficient. The upper limit of CeEBW of the welded metal is more preferably 0.70%.

In the welded joint formed by the electron-beam welding using the steel according to the embodiment of the present invention, it is preferable that the CTOD value of the welded metal: $\delta_{WM}$, the CTOD value of the heat-affected zone: $\delta_{HAZ}$, and the CTOD value of the steel (base metal): $\delta_{BM}$ satisfy the following formula 3 and formula 4.

$$0.8 \leq \delta_{BM} / \delta_{WM} \leq 1.25 \quad \text{......(Formula 3)}$$

$$0.15 \leq \delta_{HAZ} / \delta_{WM} \leq 1.1 \quad \text{......(Formula 4)}$$

Herein, the $\delta_{WM}$, the $\delta_{HAZ}$, and the $\delta_{BM}$ are the minimum values of the CTOD values when three-point bending CTOD tests are carried out six times at 0°C. When the CTOD value is 1.0 mm or more, it is considered that ductile fracture occurs, and the calculation is conducted by regarding the CTOD value as 1.0 mm.

When $\delta_{BM} / \delta_{WM}$ is less than 0.8 and/or $\delta_{HAZ} / \delta_{BM}$ is less than 0.15, a balance between the $\delta_{BM}$, the $\delta_{WM}$, and the $\delta_{HAZ}$ may excessively deteriorate, and the fracture toughness of the welded portion may notably deteriorate. Thus, the lower limits of 8BM / $\delta_{WM}$ may be 0.8 and $\delta_{HAZ} / \delta_{BM}$ may be 0.15. Since it is preferable that $\delta_{WM}$ is more than 0.8 times more than $\delta_{BM}$, the upper limit of $\delta_{BM} / \delta_{WM}$ is set to 1.25 or less.

$\delta_{WM}$ is more preferably almost the same as $\delta_{BM}$, and the upper limit of $\delta_{BM} / \delta_{WM}$ is preferably 1.1. Similarly, $\delta_{HAZ}$ is preferably almost the same as $\delta_{WM}$, and the upper limit of $\delta_{BM} / \delta_{WM}$ is preferably 1.1 or less.

In the case where the electron-beam welding is applied with the insert metal to the steel utilizing the fine Ti nitride particles such as TiN according to the present invention, it is difficult to enhance the fracture toughnesses of HAZ to be equivalent to that of the steel (base metal). Thus, in order to enhance the fracture toughness of the steel (base mental) and WM in particular, the preferable upper limit of $\delta_{HAZ} / \delta_{BM}$ is 0.40, and more preferable upper limit thereof is 0.3.

In other words, according to the steel of the embodiment of the present invention, it is capable to improve the fracture toughness of the welded metal in the welded joint after the electron-beam welding to be equivalent to that of the steel (base metal) and the fracture toughness of the heat affected zone is not significantly deteriorated as compared with the fracture toughness of the steel (base metal). Thus, it is possible to obtain the welded joint in which the fracture toughness of each zone is appropriately balanced.

The electron-beam welding can be conducted under low-vacuum condition which can be achieved using simple equipment for example, under a reduced pressure of 10 Pa or less. Although depending on the ability of the equipment, the lower limit of the degree of vacuum is preferably $10^{-2}$ Pa. The welding conditions are determined depending on the ability of the equipment and the thickness of steels within ranges in which accelerating voltage is 130 V to 180 V, beam current is 100 mA to 130 mA, and welding speed is 100 mm/min to 250 mm/min. For example, when the thickness is 80 mm, it is recommended that the accelerating voltage is approximately 175V, the beam current is approximately 120 mA, and the welding speed is approximately 125 mm/min.

When carrying out the electron-beam welding, the insert metal containing Ni is inserted between the groove surfaces of the welded portion. As the insert metal containing Ni, a Ni-based alloy foil, a Ni-Fe alloy foil or a pure Ni foil can be used.

When a Ni foil is used, it is possible to easily compute a thickness of the insert metal necessary to obtain the target amount of Ni from the amount of Ni in the steel, the target amount of Ni in the welded metal, the dimension of the steel and the width of the welded metal. As the pure Ni foil, a foil having a necessary thickness may be prepared, but a plurality of thin foils may be laminated so as to obtain the necessary thickness.

For example, in a case in which an attempt is made to produce a welded joint, in which a welded metal has an amount of Ni of 2%, by using a steel (base metal) having an amount of Ni of 0%, first, the width of the welded metal after electron-beam welding is investigated by using preliminary tests and the like. As a result, in a case in which the width of the weld metal is determined to be 4.0 mm, when electron-beam welding is carried out with a Ni foil having a thickness of 0.08 mm interposed, an electron-beam welded joint of a welded metal having an amount of Ni of approximately 2% is obtained.

Next, the method of manufacturing the steel of the present invention will be described. In the method according to the present invention, it is possible to limit the number of the coarse inclusion particles to 20 pieces/$mm^2$ or less, by cooling at a rate of 9 °C/min or more in a casting process for casting the steel such as the slab (steel piece). At the same time, it is possible to obtain the fine Ti nitride particles of $1 \times 10^3$ or more.

A continuous casting method is preferable as the method of manufacturing the steel (steel piece) from an industrial standpoint. Since it is possible to refine the formed oxides and Ti nitrides by increasing the cooling rate after casting in the continuous casting method, the continuous casting method is preferable in order to improve the toughness.

A specific method of increasing the cooling rate for the slab to 9 °C/min or more in the continuous casting includes an increase in pressure and quantity of water at a cooling zone of in the continuous casting machine, a decrease in thickness of a casting mold, and a decrease in thickness of the slab by rolling a unsolidified layer of the slab. The upper limit of the cooling rate for the slab is 30 °C/min.

Generally, since high Mn steel is inferior to carbon steel or low alloy steel in hot workability, it is necessary that a thermomechanical treatment is conducted under an appropriate condition. In the method according to the present invention, at first, the casted steel (steel piece) having the composition is heated to 950°C to 1150°C. When the heating temperature is less than 950°C, deformation resistance during hot rolling is large, and the productivity deteriorates. On the other hand, when the steel is heated to more than 1150°C, Ti nitrides in the steel (steel piece) are coarsened, and the toughnesses of the steel (base metal) and the heat-affected zone may deteriorate.

After the steel (steel piece) is heated to 950°C to 1150°C, Thermomechanical treatment (TMCP: Thermo-mechanical controlled processing) is conducted in order to obtain the required strength or toughness of the steel. The thermomechanical treatment is effective in improving the strength and the toughness of the steel, and includes, for example, (1) controlled rolling (CR), (2) controlled rolling - accelerated cooling (ACC), (3) direct quenching after rolling - tempering (direct quenching and tempering: DQT), and the like. In the present invention, (2) the controlled rolling - accelerated cooling (ACC) and (3) the direct quenching after rolling - tempering are preferable in order to improve the fracture toughness.

The controlled rolling conducted in a non-recrystallization temperature range (approximately 900°C or less) is effective in refining the structure of the steel and in improving the strength and the toughness. In the present invention, it is preferable to finish the controlled rolling at a temperature equal to or higher than $Ar_3$ transformation point in order to prevent formation of deformed ferrite.

In particular, by consecutively conducting the accelerated cooling after the controlled rolling, hard phases such as bainite and martensite are formed, which leads to improvement in the strength. In order to ensure the strength and the toughness, it is preferable that the finishing temperature of the accelerated cooling is 400°C to 600°C. The direct quenching after rolling is the method such that the quenching is conducted by water cooling and the like after performing the hot rolling in a temperature range which is higher than that for the controlled rolling. In the method, since the strength excessively increases in general, the tempering is conducted in order to ensure the toughness. A tempering temperature is preferably 400°C to 650°C.

[Examples]

Next, Examples according to the present invention will be described. Conditions for Examples are merely examples of conditions used for checking applicability and effects of the present invention, and conditions for the present invention are not limited to these examples of conditions. Further, various conditions may be employed in the present invention within the scope of the present invention, provided that the objects of the present invention can be achieved.

(Examples)

Steels were manufactured using steels containing the composition shown in Table I and Table 2 under conditions shown in Table 3 and Table 4. Test pieces were taken from the steels, were subjected to tensile tests and CTOD tests, and were measured for the tensile strength and the fracture toughness of the steel (base metal). The strength of the steel (base metal) was measured on the basis of JIS Z 2241, by taking test pieces from a thickness 1/2 portion so that a longitudinal direction was a rolling direction.

An electron-beam welding was applied to the steels to form I-groove butt-welded joints. The electron-beam welding, which employed a RPEBW method and used pure Ni foil as an insert metal, was conducted under conditions such that degree of vacuum was approximately 1 mbar, voltage was 175 V, current was 120 mA, and a welding rate was approximately 125 mm/minute. The weld bead width was 3.0 mm to 5.5 mm. Test pieces were taken from the welded metal and the composition thereof were analyzed. The results are illustrated in Table 5 and Table 6.

Further, from the welded joint, (a) six test pieces having a size of t (thickness) $\times$ 2t were taken when the thickness was less than 60 mm, whereas (b) six test pieces having a size of t (thickness) $\times$ t were taken when the thickness was 60 mm or more. A 50% fatigue crack was applied to the test pieces as a notch to a central portion of a welded metal (WM), a fusion line zone (FL), and a steel (base metal: BM). FIG. 6 shows the test piece having the notch applied thereto.

CTOD tests were performed at a test temperature of 0°C to obtain fracture toughness value $\delta_c$. Moreover, when the CTOD value was 1.0 or more, it was considered that ductile fracture occurred, and the calculation was conducted by regarding the CTOD value as 1.0 mm. The fracture toughness values of $\delta_{WM}$, the $\delta_{HAZ}$, and $\delta_{BM}$ were the minimum values among the six test pieces at each notch. Moreover, since width of a heat-affected zone of the electron-beam welded joint was narrow, CTOD value of the heat-affected zone $\delta_{HAZ}$ was measured by using test pieces having the notch applied to the welded metal.

Table 7 and Table 8 show $\delta_{BM}$ / $\delta_{WM}$ and $\delta_{HAZ}$ / $\delta_{WM}$ based on the CTOD value of the welded metal (WM) $\delta_{WM}$, the CTOD value of the heat-affected zone (HAZ) $\delta_{HAZ}$, and the CTOD value of the steel (base metal: BM) $\delta_{BM}$ of the welded joint.

Number of inclusion particles in the steel was measured through the following method. For observation of inclusion particles having an equivalent circle diameter of 1.0 μm or more (coarse inclusion particles), test pieces taken from a thickness center portion in a cross-section along a thickness direction of the steel were prepared from each of the steel, and the size and the number of the particles were measured by using FE-SEM (Field Emission Scanning Electron Microscope). For observation of inclusion particles having an equivalent circle diameter of 0.05 μm or more and less than 0.5 μm (fine Ti nitride particles), test pieces were similarly taken from the thickness center portion, extracted replica films were prepared by using the test pieces and by electrolytic polishing which employed a SPEED method (Selective Potentiostatic Etching by Electrolyic Dissolution), and the test pieces were observed by using FE-TEM (Field Emission Transmission Electron Microscope) at a magnification of 10000-fold to 1000000-fold. Inclusion particles containing Ti of 10 mass% or more, which was measured by characteristic X-radiation of EDX (Energy Dispersive X-ray Spectrometry), was judged as Ti nitride particles. The size and the number of the Ti nitride particles were measured from the results. The observations at visual fields of 20 or more were conducted at the thickness center portion of each test piece, and average value of the number of the inclusion particles (the coarse inclusion particles and the fine Ti nitride particles) per unit area were calculated.

[Table 1]

| STEEL No. | CHEMICAL COMPOSITION (mass%) | | | | | | | | | | | | | | | | CeEBB (%) | C/ CeEBB | REMARKS |
|---|---|---|---|---|---|---|---|---|---|---|---|---|---|---|---|---|---|---|---|
| | C | Si | Mn | P | S | Ti | Al | N | O | Nb | V | Cu | Ni | B | Cr | Mo | | | |
| 1 | 0.022 | 0.14 | 2.00 | 0.005 | 0.002 | 0.011 | 0.009 | 0.0035 | 0.0023 | | | | 0.21 | | | | 0.54 | 0.04 | EXAMPLE ACCORDING TO THE PRESENT INVENTION |
| 2 | 0.031 | 0.09 | 2.32 | 0.005 | 0.008 | 0.009 | 0.011 | 0.0033 | 0.0031 | 0.002 | | 0.15 | 0.30 | | | | 0.64 | 0.05 | |
| 3 | 0.031 | 0.08 | 1.78 | 0.006 | 0.002 | 0.005 | 0.017 | 0.0036 | 0.0027 | | 0.020 | | | | | | 0.48 | 0.06 | |
| 4* | 0.032 | 0.06 | 2.12 | 0.006 | 0.005 | 0.011 | 0.043 | 0.0038 | 0.0018 | 0.020 | | | | | | | 0.56 | 0.06 | |
| 5 | 0.035 | 0.10 | 2.25 | 0.015 | 0.003 | 0.011 | 0.011 | 0.0040 | 0.0035 | 0.001 | | | 0.35 | | | | 0.62 | 0.06 | |
| 6 | 0.036 | 0.24 | 2.26 | 0.006 | 0.004 | 0.009 | 0.012 | 0.0044 | 0.0033 | | | 0.23 | | | | | 0.62 | 0.06 | |
| 7* | 0.037 | 0.11 | 2.15 | 0.005 | 0.005 | 0.010 | 0.036 | 0.0039 | 0.0018 | 0.011 | | | | | | | 0.57 | 0.06 | |
| 8 | 0.039 | 0.14 | 2.30 | 0.009 | 0.003 | 0.011 | 0.015 | 0.0058 | 0.0020 | 0.002 | 0.025 | | | | | | 0.62 | 0.06 | |
| 9 | 0.041 | 0.09 | 2.07 | 0.004 | 0.007 | 0.012 | 0.046 | 0.0043 | 0.0028 | | | 0.15 | 0.48 | | | | 0.60 | 0.07 | |
| 10* | 0.042 | 0.11 | 2.15 | 0.007 | 0.005 | 0.011 | 0.022 | 0.0038 | 0.0018 | 0.007 | | | | | | | 0.58 | 0.07 | |
| 11 | 0.044 | 0.12 | 2.04 | 0.010 | 0.002 | 0.010 | 0.008 | 0.0033 | 0.0032 | | | | | | | | 0.55 | 0.08 | |
| 12* | 0.045 | 0.11 | 1.52 | 0.007 | 0.001 | 0.015 | 0.027 | 0.0035 | 0.0021 | 0.011 | | | | | | | 0.43 | 0.11 | |
| 13 | 0.045 | 0.10 | 2.22 | 0.006 | 0.002 | 0.008 | 0.020 | 0.0020 | 0.0034 | | 0.020 | | | | | | 0.60 | 0.07 | |
| 14* | 0.048 | 0.11 | 1.95 | 0.003 | 0.001 | 0.010 | 0.009 | 0.0031 | 0.0025 | 0.011 | | | | | | | 0.54 | 0.09 | |
| 15 | 0.047 | 0.10 | 2.08 | 0.004 | 0.001 | 0.010 | 0.030 | 0.0035 | 0.0019 | | | | | | | | 0.57 | 0.08 | |
| 16* | 0.048 | 0.11 | 2.19 | 0.004 | 0.001 | 0.011 | 0.011 | 0.0031 | 0.0020 | 0.005 | | | | | | | 0.60 | 0.08 | |
| 17 | 0.049 | 0.09 | 2.11 | 0.003 | 0.001 | 0.010 | 0.036 | 0.0041 | 0.0025 | 0.002 | | | 0.45 | | | | 0.61 | 0.08 | |
| 18 | 0.049 | 0.10 | 2.14 | 0.012 | 0.002 | 0.009 | 0.011 | 0.0040 | 0.0024 | 0.002 | | 0.22 | 0.25 | | | | 0.62 | 0.08 | |
| 19 | 0.050 | 0.12 | 1.86 | 0.006 | 0.003 | 0.011 | 0.007 | 0.0036 | 0.0017 | | | | | | 0.50 | | 0.62 | 0.08 | |
| 20 | 0.050 | 0.13 | 1.82 | 0.008 | 0.003 | 0.011 | 0.010 | 0.0038 | 0.0019 | | | | | | | 0.50 | 0.61 | 0.08 | |
| 21 | 0.051 | 0.12 | 2.31 | 0.004 | 0.003 | 0.012 | 0.029 | 0.0036 | 0.0017 | | | | | | | | 0.63 | 0.08 | |
| 22 | 0.055 | 0.12 | 1.82 | 0.005 | 0.010 | 0.010 | 0.020 | 0.0030 | 0.0023 | 0.003 | 0.020 | | | | | 0.50 | 0.61 | 0.09 | |
| 23* | 0.057 | 0.10 | 1.68 | 0.006 | 0.002 | 0.009 | 0.008 | 0.0033 | 0.0026 | 0.005 | 0.015 | | 0.50 | | | | 0.51 | 0.11 | |
| 24* | 0.058 | 0.13 | 1.75 | 0.005 | 0.003 | 0.010 | 0.027 | 0.0042 | 0.0011 | 0.008 | | 0.20 | 0.20 | | | | 0.52 | 0.11 | |
| 25* | 0.059 | 0.15 | 1.85 | 0.006 | 0.002 | 0.009 | 0.022 | 0.0044 | 0.0010 | 0.010 | | 0.10 | 0.45 | | | | 0.56 | 0.11 | |
| 26 | 0.060 | 0.15 | 2.05 | 0.004 | 0.003 | 0.011 | 0.007 | 0.0038 | 0.0012 | | | 0.15 | 0.25 | | | | 0.60 | 0.10 | |
| 27 | 0.075 | 0.06 | 2.15 | 0.006 | 0.004 | 0.010 | 0.010 | 0.0059 | 0.0023 | | | | | | | | 0.61 | 0.12 | |
| 28 | 0.080 | 0.10 | 1.55 | 0.007 | 0.003 | 0.010 | 0.008 | 0.0043 | 0.0022 | | | 0.10 | 0.50 | | | 0.49 | 0.61 | 0.13 | |
| 29* | 0.081 | 0.09 | 1.95 | 0.006 | 0.003 | 0.009 | 0.018 | 0.0038 | 0.0021 | 0.010 | | | | | | | 0.57 | 0.14 | |
| 30 | 0.098 | 0.05 | 1.53 | 0.005 | 0.002 | 0.011 | 0.048 | 0.0042 | 0.0022 | | | | | | 0.41 | 0.43 | 0.65 | 0.15 | |
| 31* | 0.054 | 0.09 | 1.78 | 0.005 | 0.002 | 0.010 | 0.006 | 0.0031 | 0.0019 | 0.010 | | | | 0.0012 | | | 0.50 | 0.11 | |

* Not within the scope of the invention

Blank columns indicate that no alloying element correspond thereto was intentionally added.

[Table 2]

| STEEL No. | CHEMICAL COMPOSITION (mass%) | | | | | | | | | | | | | | | | CeEBB (%) | C/ CeEBB | REMARKS |
|---|---|---|---|---|---|---|---|---|---|---|---|---|---|---|---|---|---|---|---|
| | C | Si | Mn | P | S | Ti | Al | N | O | Nb | V | Cu | Ni | B | Cr | Mo | | | |
| 32 | 0.016 | 0.12 | 2.62 | 0.009 | 0.004 | 0.010 | 0.029 | 0.0031 | 0.0031 | | | 0.25 | 0.50 | | 0.30 | | 0.78 | 0.02 | CONVENTIONAL EXAMPLE |
| 33 | 0.120 | 0.13 | 1.92 | 0.008 | 0.003 | 0.011 | 0.022 | 0.0038 | 0.0021 | 0.015 | | | | | | | 0.60 | 0.20 | |
| 34 | 0.075 | 0.35 | 1.90 | 0.005 | 0.003 | 0.010 | 0.007 | 0.0030 | 0.0025 | 0.010 | 0.020 | | | | | | 0.55 | 0.14 | |
| 35 | 0.022 | 0.16 | 1.45 | 0.007 | 0.004 | 0.013 | 0.027 | 0.0036 | 0.0011 | 0.019 | 0.020 | | | | 0.06 | 0.07 | 0.41 | 0.05 | |
| 36 | 0.031 | 0.11 | 2.64 | 0.006 | 0.002 | 0.009 | 0.028 | 0.0034 | 0.0024 | | | | | | | | 0.69 | 0.04 | |
| 37 | 0.050 | 0.06 | 1.91 | 0.018 | 0.005 | 0.011 | 0.022 | 0.0037 | 0.0018 | 0.010 | | | | | | | 0.53 | 0.09 | |
| 38 | 0.037 | 0.15 | 1.75 | 0.008 | 0.012 | 0.010 | 0.007 | 0.0030 | 0.0024 | 0.008 | | 0.21 | 0.46 | | | | 0.52 | 0.07 | |
| 39 | 0.084 | 0.09 | 2.11 | 0.006 | 0.002 | 0.009 | 0.008 | 0.0039 | 0.0025 | 0.023 | | | | | | | 0.61 | 0.14 | |
| 40 | 0.084 | 0.09 | 1.78 | 0.009 | 0.004 | 0.009 | 0.027 | 0.0034 | 0.0019 | 0.011 | 0.032 | 0.10 | | | | | 0.54 | 0.15 | |
| 41 | 0.055 | 0.10 | 2.10 | 0.005 | 0.003 | 0.004 | 0.020 | 0.0035 | 0.0022 | | | | | | | | 0.58 | 0.09 | |
| 42 | 0.075 | 0.09 | 2.03 | 0.005 | 0.003 | 0.018 | 0.008 | 0.0032 | 0.0025 | | | | | | | | 0.58 | 0.13 | |
| 43 | 0.040 | 0.15 | 1.80 | 0.006 | 0.005 | 0.010 | 0.068 | 0.0039 | 0.0030 | 0.020 | 0.025 | 0.10 | 0.20 | | | | 0.52 | 0.08 | |
| 44 | 0.066 | 0.15 | 1.92 | 0.009 | 0.002 | 0.010 | 0.010 | 0.0011 | 0.0030 | 0.001 | | 0.20 | 0.45 | | | | 0.59 | 0.11 | |
| 45 | 0.081 | 0.09 | 2.10 | 0.005 | 0.003 | 0.009 | 0.029 | 0.0065 | 0.0025 | 0.019 | 0.025 | | | | | | 0.61 | 0.13 | |
| 46 | 0.037 | 0.11 | 2.15 | 0.006 | 0.005 | 0.011 | 0.008 | 0.0038 | 0.0049 | 0.001 | 0.025 | | | | | | 0.58 | 0.06 | |
| 47 | 0.031 | 0.10 | 1.53 | 0.004 | 0.004 | 0.012 | 0.021 | 0.0034 | 0.0019 | | | | | | | | 0.41 | 0.07 | |
| 48 | 0.075 | 0.08 | 2.30 | 0.003 | 0.003 | 0.011 | 0.018 | 0.0033 | 0.0020 | | | 0.12 | 0.14 | | | | 0.67 | 0.11 | |
| 49 | 0.094 | 0.09 | 1.84 | 0.005 | 0.005 | 0.010 | 0.023 | 0.0035 | 0.0025 | | | | | | | | 0.55 | 0.17 | |

Underlines indicate that the values were outside the range or outside the preferable range of the present invention. Blank columns indicate that no alloying element correspond thereto was intentionally added.

In Table 3 and Table 4, words written in the columns of the thermomechanical treatment indicate the following:

CR: controlled rolling (rolling at an optimal temperature for the strength and toughness),
ACC: accelerated cooling (water cooling to a temperature range of 400°C to 600°C after controlled rolling), and
DQT: quenching immediately after rolling, and tempering.

When the toughness value (CTOD value) was 1.0 mm or more, it was considered that ductile fracture occurred, and the calculation was conducted by regarding the toughness value as 1.0 mm.

[Table 3]

| STEEL No. | MANUFACTURING CONDITION | | | | REMARKS |
|---|---|---|---|---|---|
| | COOLING RATE OF SLAB (°C/min) | HEATING TEMPERATURE OF STEEL PIECE (°C) | THERMOMECHANICAL TREATMENT | THICKNESS (mm) | |
| 1 | 10 | 1050 | ACC | 50 | EXAMPLE ACCORDING TO THE PRESENT INVENTION |
| 2 | 12 | 1050 | ACC | 60 | |
| 3 | 11 | 1100 | ACC | 65 | |
| 4 | 16 | 1050 | ACC | 60 | |
| 5 | 11 | 1050 | ACC | 60 | |
| 6 | 11 | 1050 | ACC | 80 | |
| 7 | 13 | 1100 | ACC | 50 | |
| 8 | 13 | 1050 | ACC | 60 | |
| 9 | 16 | 1100 | CR | 55 | |
| 10 | 10 | 1100 | ACC | 60 | |
| 11 | 11 | 950 | ACC | 65 | |
| 12 | 9 | 1050 | ACC | 65 | |
| 13 | 11 | 1050 | CR | 90 | |
| 14 | 14 | 1100 | ACC | 80 | |
| 15 | 16 | 1050 | ACC | 75 | |
| 16 | 12 | 1050 | ACC | 55 | |
| 17 | 10 | 1000 | DQT | 100 | |
| 18 | 10 | 1050 | ACC | 65 | |
| 19 | 9 | 1050 | CR | 50 | |
| 20 | 13 | 1100 | DQT | 130 | |
| 21 | 10 | 1050 | ACC | 60 | |
| 22 | 9 | 1050 | ACC | 70 | |
| 23 | 15 | 1000 | ACC | 90 | |
| 24 | 11 | 1050 | DQT | 120 | |
| 25 | 9 | 950 | ACC | 50 | |
| 26 | 16 | 1100 | ACC | 80 | |
| 27 | 10 | 1150 | ACC | 100 | |
| 28 | 12 | 1100 | ACC | 75 | |
| 29 | 15 | 1150 | ACC | 80 | |
| 30 | 9 | 1100 | DQT | 150 | |
| 31 | 12 | 1050 | CR | 70 | |

[Table 4]

| STEEL No. | MANUFACTURING CONDITION | | | | REMARKS |
|---|---|---|---|---|---|
| | COOLING RATE OF SLAB (°C/min) | HEATING TEMPERATURE OF STEEL PIECE (°C) | THERMOMECHANICAL TREATMENT | THICKNESS (mm) | |
| 32 | 9 | 1050 | CR | 50 | CONVENTIONAL EXAMPLE |
| 33 | 11 | 1100 | DQT | 120 | |
| 34 | 14 | 1150 | ACC | 60 | |
| 35 | 16 | 1100 | ACC | 60 | |
| 36 | 10 | 1050 | ACC | 80 | |
| 37 | 13 | 1100 | CR | 50 | |
| 38 | 9 | 1100 | ACC | 55 | |
| 39 | 10 | 1150 | ACC | 80 | |
| 40 | 12 | 1100 | ACC | 90 | |
| 41 | 16 | 1050 | ACC | 50 | |
| 42 | 11 | 1100 | CR | 50 | |
| 43 | 9 | 1100 | ACC | 55 | |
| 44 | 10 | 1100 | DQT | 70 | |
| 45 | 12 | 1150 | ACC | 100 | |
| 46 | 12 | 1100 | ACC | 55 | |
| 47 | 10 | 1050 | ACC | 65 | |
| 48 | 10 | 1150 | ACC | 100 | |
| 49 | 12 | 1100 | DQT | 150 | |

[Table 5]

| WELDED JOINT No. | STEEL No. | CHEMICAL COMPOSITION (mass%) | | | | | | | | | | | | | | | | CeEBW (%) | REMARKS |
|---|---|---|---|---|---|---|---|---|---|---|---|---|---|---|---|---|---|---|---|
| | | C | Si | Mn | P | S | Ti | Al | N | O | Nb | V | Cu | Ni | B | Cr | Mo | | |
| 1 | 1 | 0.022 | 0.14 | 1.80 | 0.005 | 0.002 | 0.010 | 0.009 | 0.0035 | 0.0016 | | | | 1.98 | | | | 0.60 | EXAMPLE ACCORDING TO THE PRESENT INVENTION |
| 2 | 2 | 0.031 | 0.09 | 1.86 | 0.005 | 0.008 | 0.009 | 0.010 | 0.0033 | 0.0019 | 0.002 | | 0.15 | 1.15 | | | | 0.58 | |
| 3 | 3 | 0.031 | 0.08 | 1.60 | 0.006 | 0.002 | 0.005 | 0.016 | 0.0036 | 0.0019 | | 0.020 | | 2.28 | | | | 0.59 | |
| 4* | 4* | 0.032 | 0.06 | 1.80 | 0.006 | 0.005 | 0.010 | 0.041 | 0.0038 | 0.0014 | 0.020 | | | 1.89 | | | | 0.61 | |
| 5 | 5 | 0.035 | 0.10 | 1.91 | 0.015 | 0.003 | 0.010 | 0.010 | 0.0040 | 0.0017 | 0.001 | | | 1.86 | | | | 0.64 | |
| 6 | 6 | 0.036 | 0.24 | 1.81 | 0.006 | 0.004 | 0.009 | 0.011 | 0.0044 | 0.0020 | | | 0.23 | 1.59 | | | | 0.61 | |
| 7* | 7* | 0.037 | 0.11 | 1.83 | 0.005 | 0.005 | 0.010 | 0.034 | 0.0039 | 0.0014 | 0.011 | | | 1.94 | | | | 0.62 | |
| 8 | 8 | 0.039 | 0.14 | 1.84 | 0.009 | 0.003 | 0.010 | 0.014 | 0.0058 | 0.0016 | 0.002 | 0.025 | | 1.26 | | | | 0.59 | |
| 9 | 9 | 0.041 | 0.09 | 1.76 | 0.004 | 0.007 | 0.011 | 0.044 | 0.0043 | 0.0017 | | | 0.15 | 2.05 | | | | 0.63 | |
| 10* | 10* | 0.042 | 0.11 | 1.83 | 0.007 | 0.005 | 0.010 | 0.021 | 0.0038 | 0.0014 | 0.007 | | | 2.10 | | | | 0.64 | |
| 11 | 11 | 0.044 | 0.12 | 1.73 | 0.010 | 0.002 | 0.010 | 0.008 | 0.0033 | 0.0019 | | | | 2.06 | | | | 0.61 | |
| 12* | 12* | 0.045 | 0.11 | 1.44 | 0.007 | 0.001 | 0.014 | 0.026 | 0.0035 | 0.0017 | 0.011 | | | 2.26 | | | | 0.56 | |
| 13 | 13 | 0.045 | 0.10 | 1.89 | 0.006 | 0.002 | 0.008 | 0.019 | 0.0020 | 0.0019 | | 0.020 | | 1.69 | | | | 0.63 | |
| 14* | 14* | 0.048 | 0.11 | 1.76 | 0.003 | 0.001 | 0.010 | 0.009 | 0.0031 | 0.0018 | 0.011 | | | 1.97 | | | | 0.62 | |
| 15 | 15 | 0.047 | 0.10 | 1.77 | 0.004 | 0.001 | 0.010 | 0.029 | 0.0035 | 0.0015 | | | | 2.21 | | | | 0.64 | |
| 16* | 16* | 0.048 | 0.11 | 1.86 | 0.004 | 0.001 | 0.010 | 0.010 | 0.0031 | 0.0016 | 0.005 | | | 1.87 | | | | 0.64 | |
| 17 | 17 | 0.049 | 0.09 | 1.79 | 0.003 | 0.001 | 0.010 | 0.034 | 0.0041 | 0.0018 | 0.002 | | | 1.21 | | | | 0.58 | |
| 18 | 18 | 0.049 | 0.10 | 1.82 | 0.012 | 0.002 | 0.009 | 0.010 | 0.0040 | 0.0017 | 0.002 | | 0.22 | 1.45 | | | | 0.62 | |
| 19 | 19 | 0.050 | 0.12 | 1.67 | 0.006 | 0.003 | 0.010 | 0.007 | 0.0036 | 0.0014 | | | | 1.46 | | 0.50 | | 0.67 | |
| 20 | 20 | 0.050 | 0.13 | 1.64 | 0.006 | 0.003 | 0.010 | 0.010 | 0.0038 | 0.0015 | | | | 1.79 | | | 0.50 | 0.68 | |
| 21 | 21 | 0.051 | 0.12 | 1.85 | 0.004 | 0.003 | 0.011 | 0.028 | 0.0036 | 0.0014 | | | | 1.12 | | | | 0.59 | |
| 22 | 22 | 0.055 | 0.12 | 1.64 | 0.005 | 0.010 | 0.010 | 0.019 | 0.0030 | 0.0016 | 0.003 | 0.020 | | 1.68 | | | 0.50 | 0.68 | |
| 23* | 23* | 0.057 | 0.10 | 1.60 | 0.006 | 0.002 | 0.009 | 0.008 | 0.0033 | 0.0018 | 0.005 | 0.015 | | 1.98 | | | | 0.59 | |
| 24* | 24* | 0.058 | 0.13 | 1.58 | 0.005 | 0.003 | 0.010 | 0.026 | 0.0042 | 0.0010 | 0.008 | | 0.20 | 2.30 | | | | 0.62 | |
| 25* | 25* | 0.059 | 0.15 | 1.67 | 0.006 | 0.002 | 0.009 | 0.021 | 0.0044 | 0.0009 | 0.010 | | 0.10 | 1.80 | | | | 0.60 | |
| 26 | 26 | 0.060 | 0.15 | 1.74 | 0.004 | 0.003 | 0.010 | 0.007 | 0.0038 | 0.0011 | | | 0.15 | 1.96 | | | | 0.64 | |
| 27 | 27 | 0.075 | 0.06 | 1.83 | 0.006 | 0.004 | 0.010 | 0.010 | 0.0059 | 0.0016 | | | | 1.55 | | | | 0.64 | |
| 28 | 28 | 0.080 | 0.10 | 1.47 | 0.007 | 0.003 | 0.010 | 0.008 | 0.0043 | 0.0015 | | | 0.10 | 1.99 | | | 0.49 | 0.69 | |
| 29* | 29* | 0.081 | 0.09 | 1.76 | 0.006 | 0.003 | 0.009 | 0.017 | 0.0038 | 0.0017 | 0.010 | | | 1.81 | | | | 0.64 | |
| 30 | 30 | 0.098 | 0.05 | 1.30 | 0.005 | 0.002 | 0.010 | 0.046 | 0.0042 | 0.0015 | | | | 1.09 | | 0.35 | 0.31 | 0.63 | |
| 31* | 31* | 0.054 | 0.09 | 1.78 | 0.005 | 0.002 | 0.010 | 0.006 | 0.0031 | 0.0019 | 0.010 | | | 1.25 | 0.0014 | | | 0.58 | |

* Not within the scope of the invention

[Table 6]

| WELDED JOINT No. | STEEL No. | CHEMICAL COMPOSITION (mass%) | | | | | | | | | | | | | | | | CeEBW (%) | REMARKS |
|---|---|---|---|---|---|---|---|---|---|---|---|---|---|---|---|---|---|---|---|
| | | C | Si | Mn | P | S | Ti | Al | N | O | Nb | V | Cu | Ni | B | Cr | Mo | | |
| 32 | 32 | 0.016 | 0.12 | 2.10 | 0.009 | 0.004 | 0.010 | 0.028 | 0.0031 | 0.0019 | | | 0.25 | 2.10 | | 0.30 | | 0.76 | CONVENTIONAL EXAMPLE |
| 33 | 33 | 0.120 | 0.13 | 1.73 | 0.008 | 0.003 | 0.010 | 0.021 | 0.0038 | 0.0017 | 0.015 | | | 1.98 | | | | 0.68 | |
| 34 | 34 | 0.075 | 0.35 | 1.71 | 0.005 | 0.003 | 0.010 | 0.007 | 0.0030 | 0.0018 | 0.010 | 0.020 | | 2.30 | | | | 0.66 | |
| 35 | 35 | 0.022 | 0.16 | 1.38 | 0.007 | 0.004 | 0.012 | 0.026 | 0.0036 | 0.0010 | 0.019 | 0.020 | | 2.30 | | 0.06 | 0.07 | 0.55 | |
| 36 | 36 | 0.031 | 0.11 | 2.11 | 0.006 | 0.002 | 0.009 | 0.027 | 0.0034 | 0.0017 | | | | 1.96 | | | | 0.69 | |
| 37 | 37 | 0.050 | 0.06 | 1.72 | 0.018 | 0.005 | 0.010 | 0.021 | 0.0037 | 0.0014 | 0.010 | | | 1.91 | | | | 0.61 | |
| 38 | 38 | 0.037 | 0.15 | 1.58 | 0.008 | 0.012 | 0.010 | 0.007 | 0.0030 | 0.0017 | 0.008 | | 0.21 | 2.21 | | | | 0.59 | |
| 39 | 39 | 0.084 | 0.09 | 1.79 | 0.006 | 0.002 | 0.009 | 0.008 | 0.0039 | 0.0018 | 0.023 | | | 1.94 | | | | 0.66 | |
| 40 | 40 | 0.094 | 0.09 | 1.62 | 0.009 | 0.004 | 0.009 | 0.026 | 0.0034 | 0.0015 | 0.011 | 0.032 | 0.10 | 1.80 | | | | 0.63 | |
| 41 | 41 | 0.055 | 0.10 | 1.79 | 0.005 | 0.003 | 0.004 | 0.019 | 0.0035 | 0.0015 | | | | 1.96 | | | | 0.63 | |
| 42 | 42 | 0.075 | 0.09 | 1.73 | 0.005 | 0.003 | 0.017 | 0.008 | 0.0032 | 0.0018 | | | | 1.80 | | | | 0.63 | |
| 43 | 43 | 0.040 | 0.15 | 1.62 | 0.006 | 0.005 | 0.010 | 0.065 | 0.0039 | 0.0018 | 0.020 | 0.025 | 0.10 | 1.96 | | | | 0.59 | |
| 44 | 44 | 0.066 | 0.15 | 1.73 | 0.009 | 0.002 | 0.010 | 0.010 | 0.0011 | 0.0018 | 0.001 | | 0.20 | 1.91 | | | | 0.64 | |
| 45 | 45 | 0.081 | 0.09 | 1.79 | 0.005 | 0.003 | 0.009 | 0.028 | 0.0065 | 0.0018 | 0.019 | 0.025 | | 2.21 | | | | 0.68 | |
| 46 | 46 | 0.037 | 0.11 | 1.83 | 0.006 | 0.005 | 0.010 | 0.008 | 0.0038 | 0.0020 | 0.001 | 0.025 | | 1.99 | | | | 0.63 | |
| 47 | 47 | 0.031 | 0.10 | 1.45 | 0.004 | 0.004 | 0.011 | 0.020 | 0.0034 | 0.0015 | | | | 2.25 | | | | 0.54 | |
| 48 | 48 | 0.075 | 0.08 | 1.84 | 0.003 | 0.003 | 0.010 | 0.017 | 0.0033 | 0.0016 | | | 0.12 | 1.56 | | | | 0.65 | |
| 49 | 49 | 0.094 | 0.09 | 1.66 | 0.005 | 0.005 | 0.010 | 0.022 | 0.0035 | 0.0018 | | | | 1.10 | | | | 0.58 | |
| 50 | 6 | 0.036 | 0.24 | 1.81 | 0.006 | 0.004 | 0.009 | 0.011 | 0.0044 | 0.0020 | | | 0.23 | 0.89 | | | | 0.56 | |
| 51 | 22 | 0.055 | 0.12 | 1.64 | 0.005 | 0.010 | 0.010 | 0.019 | 0.0030 | 0.0016 | 0.003 | 0.020 | | 2.40 | | | 0.50 | 0.73 | |
| 52 | 23 | 0.057 | 0.10 | 1.60 | 0.006 | 0.002 | 0.009 | 0.008 | 0.0033 | 0.0018 | 0.005 | 0.015 | | 1.39 | | | | 0.55 | |
| 53 | 30 | 0.098 | 0.05 | 1.30 | 0.006 | 0.003 | 0.010 | 0.046 | 0.0042 | 0.0015 | | | | 2.29 | | 0.41 | 0.43 | 0.74 | |

Underlines indicate that the values were that of conventional example, were outside of the scope of the present invention, or were outside of the preferable range of the present invention. Blank columns indicate that no alloying element correspond thereto was intentionally added.

[Table 7]

| WELDED JOINT No. | STEEL No. | MANUFACTURING CONDITION: COOLING RATE OF SLAB (°C/min) | HEATING TEMPERATURE OF STEEL PIECE (°C) | THERMOMECHANICAL TREATMENT | THICKNESS (mm) | PROPERTIES OF BASE METAL: YIELD STRENGTH (MPa) | TENSILE STRENGTH (MPa) | Ti NITRIDES HAVING EQUIVALENT CIRCLE DIAMETER OF 0.05 μm TO 0.5 μm (PIECES/mm²) | ALL PARTICLES HAVING EQUIVALENT CIRCLE DIAMETER OF 1.0 μm OR MORE (PIECES/mm²) | TOUGHNESS OF WELDED JOINT δc: [HAZ] LOWEST VALUE (mm) | [WM] LOWEST VALUE (MM) | [BM] LOWEST VALUE (MM) | $\delta_{HAZ}/\delta_{WM}$ | $\delta_{BM}/\delta_{WM}$ | REMARKS |
|---|---|---|---|---|---|---|---|---|---|---|---|---|---|---|---|
| 1 | 1 | 10 | 1050 | ACC | 50 | 383 | 512 | $6.8\times10^3$ | 16 | 0.28 | 1.00 | 1.00 | 0.28 | 1.00 | EXAMPLE ACCORDING TO THE PRESENT INVENTION |
| 2 | 2 | 12 | 1050 | ACC | 60 | 402 | 509 | $7.1\times10^3$ | 17 | 0.19 | 1.00 | 1.00 | 0.19 | 1.00 | |
| 3 | 3 | 11 | 1100 | ACC | 65 | 377 | 489 | $1.8\times10^4$ | 18 | 0.26 | 0.99 | 0.99 | 0.26 | 1.00 | |
| 4* | 4* | 16 | 1050 | ACC | 60 | 387 | 506 | $1.3\times10^4$ | 19 | 0.21 | 1.00 | 1.00 | 0.21 | 1.00 | |
| 5 | 5 | 11 | 1050 | ACC | 60 | 397 | 502 | $1.6\times10^4$ | 13 | 0.19 | 1.00 | 1.00 | 0.19 | 1.00 | |
| 6 | 6 | 11 | 1050 | ACC | 80 | 381 | 486 | $6.6\times10^3$ | 18 | 0.29 | 0.96 | 0.96 | 0.30 | 1.00 | |
| 7* | 7* | 13 | 1100 | ACC | 50 | 384 | 501 | $1.8\times10^4$ | 19 | 0.21 | 1.00 | 1.00 | 0.21 | 1.00 | |
| 8 | 8 | 13 | 1050 | ACC | 60 | 400 | 507 | $3.9\times10^3$ | 17 | 0.16 | 1.00 | 0.96 | 0.16 | 0.96 | |
| 9 | 9 | 16 | 1100 | CR | 55 | 381 | 490 | $1.4\times10^4$ | 13 | 0.15 | 1.00 | 1.00 | 0.15 | 1.00 | |
| 10* | 10* | 10 | 1100 | ACC | 60 | 402 | 503 | $7.7\times10^3$ | 18 | 0.24 | 1.00 | 0.97 | 0.24 | 0.97 | |
| 11 | 11 | 11 | 950 | ACC | 65 | 381 | 489 | $1.0\times10^4$ | 12 | 0.26 | 1.00 | 0.96 | 0.26 | 0.96 | |
| 12* | 12* | 9 | 1050 | ACC | 65 | 364 | 482 | $1.2\times10^4$ | 18 | 0.19 | 1.00 | 1.00 | 0.19 | 1.00 | |
| 13 | 13 | 11 | 1050 | CR | 90 | 398 | 500 | $2.1\times10^4$ | 16 | 0.17 | 1.00 | 0.97 | 0.17 | 0.97 | |
| 14* | 14* | 14 | 1100 | ACC | 80 | 384 | 505 | $1.4\times10^4$ | 17 | 0.15 | 0.99 | 1.00 | 0.15 | 1.01 | |
| 15 | 15 | 16 | 1050 | ACC | 75 | 397 | 499 | $1.4\times10^4$ | 13 | 0.26 | 1.00 | 1.00 | 0.26 | 1.00 | |
| 16* | 16* | 12 | 1050 | ACC | 55 | 379 | 491 | $2.6\times10^4$ | 18 | 0.23 | 1.00 | 1.00 | 0.23 | 1.00 | |
| 17 | 17 | 10 | 1000 | DQT | 100 | 399 | 502 | $8.4\times10^3$ | 18 | 0.20 | 0.96 | 1.00 | 0.21 | 1.04 | |
| 18 | 18 | 10 | 1050 | ACC | 65 | 376 | 487 | $7.1\times10^4$ | 20 | 0.20 | 1.00 | 1.00 | 0.20 | 1.00 | |
| 19 | 19 | 9 | 1050 | CR | 50 | 388 | 504 | $5.0\times10^4$ | 16 | 0.19 | 1.00 | 1.00 | 0.19 | 1.00 | |
| 20 | 20 | 13 | 1100 | DQT | 130 | 398 | 488 | $1.2\times10^4$ | 13 | 0.22 | 1.00 | 1.00 | 0.22 | 1.00 | |
| 21 | 21 | 10 | 1050 | ACC | 60 | 381 | 505 | $1.3\times10^4$ | 20 | 0.27 | 1.00 | 1.00 | 0.27 | 1.00 | |
| 22 | 22 | 9 | 1050 | ACC | 70 | 383 | 499 | $9.1\times10^3$ | 14 | 0.30 | 1.00 | 1.00 | 0.30 | 1.00 | |
| 23* | 23* | 15 | 1000 | ACC | 90 | 396 | 498 | $5.0\times10^4$ | 16 | 0.18 | 1.00 | 1.00 | 0.18 | 1.00 | |
| 24* | 24* | 11 | 1050 | DQT | 120 | 383 | 501 | $1.2\times10^4$ | 13 | 0.28 | 1.00 | 1.00 | 0.28 | 1.00 | |
| 25* | 25* | 9 | 950 | ACC | 50 | 398 | 501 | $1.3\times10^4$ | 20 | 0.27 | 1.00 | 0.96 | 0.27 | 0.96 | |
| 26 | 26 | 16 | 1100 | ACC | 80 | 381 | 492 | $9.1\times10^3$ | 14 | 0.28 | 1.00 | 1.00 | 0.28 | 1.00 | |
| 27 | 27 | 10 | 1150 | ACC | 100 | 380 | 493 | $2.0\times10^4$ | 20 | 0.25 | 1.00 | 0.97 | 0.25 | 0.97 | |
| 28 | 28 | 12 | 1100 | ACC | 75 | 382 | 498 | $1.1\times10^4$ | 15 | 0.17 | 0.96 | 1.00 | 0.18 | 1.04 | |
| 29* | 29* | 15 | 1150 | ACC | 80 | 396 | 488 | $1.2\times10^4$ | 13 | 0.23 | 1.00 | 1.00 | 0.23 | 1.00 | |
| 30 | 30 | 9 | 1100 | DQT | 150 | 383 | 502 | $4.8\times10^4$ | 18 | 0.21 | 0.97 | 1.00 | 0.22 | 1.03 | |
| 31* | 31* | 12 | 1050 | CR | 70 | 379 | 474 | $1.1\times10^4$ | 15 | 0.35 | 1.00 | 1.00 | 0.35 | 1.00 | |

* Not within the scope of the invention

Underlines indicate that the values were outside of the scope of the present invention, or were outside of the preferable range of the present invention.

[Table 8]

| WELDED JOINT No. | STEEL No. | MANUFACTURING CONDITION: COOLING RATE OF SLAB (°C/min) | MANUFACTURING CONDITION: HEATING TEMPERATURE OF STEEL PIECE (°C) | MANUFACTURING CONDITION: THERMOMECHANICAL TREATMENT | MANUFACTURING CONDITION: THICKNESS (mm) | PROPERTIES OF BASE METAL: YIELD STRENGTH (MPa) | PROPERTIES OF BASE METAL: TENSILE STRENGTH (MPa) | PROPERTIES OF BASE METAL: Ti NITRIDES HAVING EQUIVALENT CIRCLE DIAMETER OF 0.05 μm TO 0.5 μm (PIECES/mm²) | PROPERTIES OF BASE METAL: ALL PARTICLES HAVING EQUIVALENT CIRCLE DIAMETER OF 1.0 μm OR MORE (PIECES/mm²) | TOUGHNESS OF WELDED JOINT δc: [HAZ] LOWEST VALUE (mm) | TOUGHNESS OF WELDED JOINT δc: [WM] LOWEST VALUE (MM) | TOUGHNESS OF WELDED JOINT δc: [BM] LOWEST VALUE (MM) | TOUGHNESS OF WELDED JOINT δc: $\delta_{HAZ}/\delta_{WM}$ | TOUGHNESS OF WELDED JOINT δc: $\delta_{BM}/\delta_{WM}$ | REMARKS |
|---|---|---|---|---|---|---|---|---|---|---|---|---|---|---|---|
| 32 | 32 | 9 | 1050 | CR | 50 | 365 | 476 | $7.7\times10^{3}$ | 14 | 0.03 | 1.00 | 0.95 | 0.03 | 0.95 | CONVENTIONAL EXAMPLE |
| 33 | 33 | 11 | 1100 | DQT | 120 | 397 | 501 | $8.6\times10^{3}$ | 18 | 0.04 | 0.95 | 0.89 | 0.04 | 0.94 | |
| 34 | 34 | 14 | 1150 | ACC | 60 | 398 | 503 | $2.4\times10^{3}$ | 13 | 0.02 | 0.96 | 1.00 | 0.02 | 1.04 | |
| 35 | 35 | 16 | 1100 | ACC | 60 | 334 | 448 | $5.7\times10^{4}$ | 12 | 0.18 | 0.11 | 1.00 | 1.64 | 9.09 | |
| 36 | 36 | 10 | 1050 | ACC | 80 | 424 | 533 | $7.1\times10^{3}$ | 18 | 0.08 | 0.96 | 0.96 | 0.08 | 1.00 | |
| 37 | 37 | 13 | 1100 | CR | 50 | 387 | 506 | $9.4\times10^{3}$ | 15 | 0.02 | 0.94 | 0.92 | 0.02 | 0.98 | |
| 38 | 38 | 9 | 1100 | ACC | 55 | 397 | 500 | $1.3\times10^{4}$ | 19 | 0.03 | 0.96 | 0.96 | 0.03 | 1.00 | |
| 39 | 39 | 10 | 1150 | ACC | 80 | 378 | 503 | $7.7\times10^{3}$ | 14 | 0.06 | 0.96 | 1.00 | 0.06 | 1.04 | |
| 40 | 40 | 12 | 1100 | ACC | 90 | 374 | 488 | $8.6\times10^{3}$ | 17 | 0.03 | 1.00 | 1.00 | 0.03 | 1.00 | |
| 41 | 41 | 16 | 1050 | ACC | 50 | 384 | 504 | $7.2\times10^{2}$ | 13 | 0.03 | 0.95 | 1.00 | 0.03 | 1.05 | |
| 42 | 42 | 11 | 1100 | CR | 50 | 398 | 501 | $5.7\times10^{4}$ | 39 | 0.04 | 1.00 | 0.96 | 0.04 | 0.96 | |
| 43 | 43 | 9 | 1100 | ACC | 55 | 377 | 490 | $9.4\times10^{3}$ | 35 | 0.04 | 0.96 | 0.97 | 0.04 | 1.01 | |
| 44 | 44 | 10 | 1100 | DQT | 70 | 385 | 501 | $5.1\times10^{2}$ | 16 | 0.09 | 0.95 | 1.00 | 0.09 | 1.05 | |
| 45 | 45 | 12 | 1150 | ACC | 100 | 399 | 490 | $7.7\times10^{3}$ | 42 | 0.03 | 0.93 | 0.93 | 0.03 | 1.00 | |
| 46 | 46 | 12 | 1100 | ACC | 55 | 376 | 501 | $5.6\times10^{5}$ | 48 | 0.05 | 1.00 | 0.92 | 0.05 | 0.92 | |
| 47 | 47 | 10 | 1050 | ACC | 65 | 323 | 448 | $2.4\times10^{3}$ | 19 | 0.19 | 1.00 | 1.00 | 0.19 | 1.00 | |
| 48 | 48 | 10 | 1150 | ACC | 100 | 399 | 508 | $8.6\times10^{3}$ | 13 | 0.04 | 1.00 | 0.97 | 0.04 | 0.97 | |
| 49 | 49 | 12 | 1100 | DQT | 150 | 377 | 503 | $2.4\times10^{3}$ | 17 | 0.02 | 0.97 | 1.00 | 0.02 | 1.03 | |
| 50 | 6 | 11 | 1050 | ACC | 80 | 378 | 489 | $6.6\times10^{3}$ | 18 | 0.02 | 0.09 | 1.00 | 0.22 | 11.11 | |
| 51 | 22 | 9 | 1050 | ACC | 70 | 385 | 501 | $9.1\times10^{3}$ | 14 | 0.01 | 0.95 | 1.00 | 0.01 | 1.05 | |
| 52 | 23 | 15 | 1050 | ACC | 90 | 396 | 498 | $5.0\times10^{4}$ | 16 | 0.02 | 0.09 | 1.00 | 0.22 | 11.11 | |
| 53 | 30 | 9 | 1100 | DQT | 150 | 378 | 501 | $1.2\times10^{4}$ | 18 | 0.01 | 0.95 | 1.00 | 0.01 | 1.05 | |

Underlines indicate that the values were that of conventional example, or were outside of the preferable range of the present invention.

As shown in Table 1, Table 5, and Table 7, in welded joints No. 1-3, 5, 6, 8, 9, 11, 13, 15, 17-22, 26-28, 30 which are the example according to the present invention, all of the composition, the number of the inclusion particles, CeEBB, CeEBW, and C/CeEBB of the steel (base metal) and the welded metal are within the range of the present invention, and $\delta_{BM}$ / $\delta_{WM}$, and $\delta_{HAZ}$ / $\delta_{WM}$ which are ratios of $\delta c$ of the steel (BM), the welded metal, and the heat-affected zone (HAZ) exhibit sufficient values.

On the other hand, as shown in Table 2, Table 6 and Table 8, in welded joint No. 32 which is the conventional example, since an amount of C is insufficient and an amount of Mn is excessive, CeEBB is higher, and CTOD value of the heat-affected zone (HAZ) $\delta_{HAZ}$ is lower, and value of $\delta_{HAZ}$ / $\delta_{WM}$ is insufficient.

In welded joint No. 33 (conventional example), since an amount of C is excessive, CTOD value of the heat-affected zone (HAZ) $\delta_{HAZ}$ and value of $\delta_{HAZ}$ / $\delta_{WM}$ is insufficient. In welded joint No. 35 (conventional example), since an amount of Mn is insufficient and CeEBB is lower, strength of the steel (base metal) is lower, CTOD value of the welded metal (WM) $\delta_{WM}$ decreases, and value of $\delta_{BM}$ / $\delta_{WM}$ is higher.

In welded joint No. 34 (conventional example), since an amount of Si is excessive, brittle phase forms in the heat-affected zone (HAZ), CTOD value of the heat-affected zone $\delta_{HAZ}$ is lower, and value of $\delta_{HAZ}$ / $\delta_{WM}$ is insufficient. In welded joint No. 36 (conventional example), since an amount of Mn is excessive and CeEBB is higher, CTOD value of the heat-affected zone (HAZ) $\delta_{HAZ}$ decreases and value of $\delta_{HAZ}$ / $\delta_{WM}$ is insufficient.

In welded joints No. 37 and No. 38 (conventional examples), since an amount of P and an amount of S are respectively excessive, CTOD value of the heat-affected zone (HAZ) $\delta_{HAZ}$ is lower and value of $\delta_{HAZ}$ / $\delta_{WM}$ is insufficient. In welded joints No. 39 and No. 40 (conventional examples), since an amount of Nb and an amount of V are respectively excessive, CTOD value of the heat-affected zone (HAZ) $\delta_{HAZ}$ is lower and value of $\delta_{HAZ}$ / $\delta_{WM}$ is insufficient.

In welded joint No. 41 (conventional example), an amount ofTi is insufficient, and in welded joint No. 44 (conventional example), an amount ofN is insufficient. Thus, since nitrides such as TiN etc. do not form sufficiently, CTOD value of the heat-affected zone (HAZ) is lower and value of $\delta_{HAZ}$ / $\delta_{WM}$ is insufficient.

In welded joint No. 42 (conventional example), an amount of Ti is excessive, and in welded joint No. 45 (conventional example), an amount of N is excessive. Thus, since inclusions coarsen, CTOD value of the heat-affected zone (HAZ) $\delta_{HAZ}$ is lower and value of $\delta_{HAZ}$ / $\delta_{WM}$ is insufficient.

In welded joint No. 43 (conventional example), an amount of A1 is excessive, and in welded joint No. 46, an amount of O is excessive. Thus, since inclusion particles which act as the starting point of fracture are excessive, CTOD value of the heat-affected zone (HAZ) $\delta_{HAZ}$ is lower and value of $\delta_{HAZ}$ / $\delta_{WM}$ is insufficient.

In welded joint No. 47 (conventional example), CeEBB of steel (base metal) is lower and the strength of steel (base metal) decreases. In welded joint No. 48 (conventional example), since CeEBB of the steel is lower, CTOD value of the heat-affected zone (HAZ) $\delta_{HAZ}$ decreases and value of $\delta_{HAZ}$ / $\delta_{WM}$ is insufficient. In welded joint No. 49 (conventional example), since C/CeEBB of the steel is higher, CTOD value of the heat-affected zone (HAZ) $\delta_{HAZ}$ is lower and value of $\delta_{HAZ}$ / $\delta_{WM}$ is insufficient.

In welded joint No. 50 (conventional example), an amount of Ni is insufficient, and in welded joint No. 52 (conventional example), CeEBB of the welded metal (WM) is lower. Thus, CTOD value of the welded metal (WM) $\delta_{WM}$ is lower and value of $\delta_{BM}$ / $\delta_{WM}$ is higher.

In welded joint No. 51 (conventional example), an amount of Ni is excessive, and in welded joint No. 53 (conventional example), CeEBW of the welded metal (WM) is higher. Thus, CTOD value of the heat-affected zone (HAZ) $\delta_{HAZ}$ is lower and value of $\delta_{HAZ}$ / $\delta_{WM}$ is insufficient.

Industrial Applicability

According to the present invention, the deterioration in the fracture toughnesses of a welded metal and a heat-affected zone of an electron-beam welded joint of a steel with a yield strength of 355 MPa grade is suppressed as compared with the fracture toughness of a steel (base metal). Thus, it is possible to manufacture the electron-beam-welded joint in which the fracture toughness of each zone is appropriately balanced and to provide the steel which is suitable for constituting a foundation portion of a tower of a wind power generator at sea at a low cost. Therefore, the present invention has high industrial applicability in the field of large scale steel structure construction.

## Claims

1. An electron-beam welded joint manufactured by applying an electron-beam welding to a steel and forming a welded metal, the steel consisting of a composition, by mass%,
C: 0.02% to 0.10%,

Si: 0.03% to 0.30%,
Mn: 1.5% to 2.5%,
Al: more than 0.004% to 0.05% or less,
Ti: 0.005% to 0.015%,
N: 0.0020% to 0.0060%,
Nb: 0% to 0.004%,
V: 0% to 0.030%,
Cr: 0% to 0.50%,
Mo: 0% to 0.50%,
Cu: 0% to 0.25%,
Ni: 0% to 0.50%,
B: 0% to 0.0030%,
Ca: 0% to 0.0050%,
P: limited to 0.015% or less,
S: limited to 0.010% or less,
O: limited to 0.0035% or less,
Mg: limited to 0.0002% or less, and with
a balance consisting of iron and unavoidable impurities, wherein
an index value CeEBB obtained by substituting the composition of the steel into a following Formula 1 is 0.42% to 0.65%,
a number of inclusion particles having an equivalent circle diameter of 1.0 μm or more measured by using FE-SEM is 20 pieces/$mm^2$ or less at a thickness center portion in a cross-section along a thickness direction of the steel,
a number of nitride particles containing Ti of 10% or more and having an equivalent circle diameter of 0.05 μm or more and less than 0.5 μm measured by using FE-TEM at a magnification of 10000-fold to 1000000-fold is $1 \times 10^3$ pieces/$mm^2$ or more and less than $5 \times 10^4$ pieces/$mm^2$ at the thickness center portion,
the welded metal consisting of a composition, by mass%,
C: 0.02% to 0.10%,
Si: 0.03% to 0.30%,
Mn: 1.2% to 2.4%,
Al: more than 0.004% to 0.05% or less,
Ni: 1.0% to 2.3%,
Ti: 0.005% to 0.015%,
N: 0.0020% to 0.0060%,
Nb: 0% to 0.004%,
V: 0% to 0.030%,
Cr: 0% to 0.50%,
Mo: 0% to 0.50%,
Cu: 0% to 0.25%,
B: 0% to 0.0030%,
Ca: 0% to 0.0050%,
P: limited to 0.015% or less,
S: limited to 0.010% or less,
O: limited to 0.0020% or less,
Mg: limited to 0.0002% or less, and
a balance consisting of iron and unavoidable impurities,
an index value CeEBW obtained by substituting the composition of the welded metal into a following Formula 2 is 0.56% to 0.73%, and
a C/CeEBB, which is a ratio of an amount in mass% of C in the steel relative to the index value CeEBB, is 0.02 to 0.15,

$$CeEBB = C + (1/4)Mn + (1/15)Cu + (1/15)Ni + (1/5)Cr + (1/5)Mo + (1/5)V \quad \text{.... (Formula 1)}$$

where C, Mn, Cu, Ni, Cr, Mo and V represent amounts in mass% of each element contained in the composition of the steel, and

$$CeEBW=C+(1/4)Mn+(1/15)Cu+(1/15)Ni+(1/5)Cr+(1/5)Mo+(1/5)V \quad ...... \text{(Formula 2)}$$

where C, Mn, Cu, Ni, Cr, Mo and V represent amounts in a mass% of each element contained in the composition of the welded metal.

2. The electron-beam welded joint according to Claim 1, wherein the steel has a thickness of 45 to 150 mm.

3. The electron-beam welded joint according to Claim 1 or 2, wherein, when a crack tip opening displacement value CTOD value of the welded metal is defined as $\delta_{WM}$, a CTOD value of a heat-affected zone is defined as $\delta_{HAZ}$, and a CTOD value of the steel is defined as $\delta_{BM}$, following formulae 3 and 4 are satisfied, wherein the CTOD values are fracture toughness values measured by CTOD test at a test temperature of 0°C:

$$0.8 \leq \delta_{BM} / \delta_{WM} \leq 1.25 \quad ......\text{(Formula 3)}$$

$$0.15 \leq \delta_{HAZ} / \delta_{WM} \leq 1.1 \quad ......\text{(Formula 4)}$$

4. A steel for an electron-beam welding, the steel consisting of a composition, by mass%,
C: 0.02% to 0.10%,
Si: 0.05% to 0.30%,
Mn: 1.5% to 2.5%,
Al: more than 0.004% to 0.05% or less,
Ti: 0.005% to 0.015%,
N: 0.0020% to 0.0060%,
Nb: 0% to 0.004%,
V: 0%, to 0.030%,
Cr: 0% to 0.50%,
Mo: 0% to 0.50%,
Cu: 0% to 0.25%,
Ni: 0% to 0.50%,
B: 0% to 0.0030%,
Ca: 0% to 0.0050%,
P: limited to 0.015% or less,
S: limited to 0.010% or less,
O: limited to 0.0035% or less,
Mg: limited to 0.0002% or less, and
a balance consisting of iron and unavoidable impurities, wherein
an index value CeEBB obtained by substituting the composition of the steel into a following Formula 1 is 0.42% to 0.65%,
a number of inclusion particles having an equivalent circle diameter of 1.0 μm or more measured by using FE-SEM is 20 pieces/mm$^2$ or less at a thickness center portion in a cross-section along a thickness direction of the steel,
a number of nitride particles containing Ti of 10% or more and having an equivalent circle diameter of 0.05 μm or more and less than 0.5 μm measured by using FE-TEM at a magnification of 10000-fold to 1000000-fold is $1 \times 10^3$ pieces/mm$^2$ or more and less than $5 \times 10^4$ pieces/mm$^2$ at the thickness center portion,
a C/CeEBB, which is a ratio of an amount of C relative to the index value CeEBB of hardenability after the electron-beam welding, is 0.02 to 0.15,

$$CeEBB = C+(1/4)Mn+(1/15)Cu+(1/15)Ni+(1/5)Cr+(1/5)Mo+(1/5)V \quad ......\text{(Formula 1)}$$

where C, Mn, Cu, Ni, Cr, Mo, and V represent amounts in mass% of each element contained in the composition of the steel.

5. The steel for the electron-beam welding according to Claim 4, wherein the steel has a thickness of 45 to 150 mm.

6. A method of manufacturing the steel for the electron-beam welding according to Claim 4, the method comprising, a casting process of casting and cooling the steel so that a cooling rate in a temperature range of 1300°C to 1100°C is 9 to 30°C/min, and
a process of heating the steel to a temperature range of 950°C to 1150°C after the casting process, and thereafter thermomechanical-treating the steel.

**Patentansprüche**

1. Eine Elektronenstrahl-Schweißverbindung, hergestellt durch Anwenden von Elektronenstrahl-Schweißen auf einen Stahl und Bilden eines geschweißten Metalls, wobei der Stahl aus einer Zusammensetzung besteht, in Massen-%, aus:

C: 0,02% bis 0,10%,
Si: 0,03% bis 0,30%,
Mn: 1,5% bis 2,5%,
Al: mehr als 0,004 bis 0,05% oder weniger,
Ti: 0,005% bis 0,015%,
N: 0,0020% bis 0,0060%,
Nb: 0% bis 0,004%,
V: 0% bis 0,030%,
Cr: 0% bis 0,50%,
Mo: 0% bis 0,50%,
Cu: 0% bis 0,25%,
Ni: 0% bis 0,50%,
B: 0% bis 0,0030%,
Ca: 0% bis 0,0050%,
P: begrenzt auf 0,015% oder weniger,
S: begrenzt auf 0,010% oder weniger,
O: begrenzt auf 0,0035% oder weniger,
Mg: begrenzt auf 0,0002% oder weniger und mit
einem Rest bestehend aus Eisen und unvermeidbaren Verunreinigungen, wobei
ein Indexwert CeEBB, erhalten durch Einsetzen der Zusammensetzung des Stahls in eine folgende Formel 1, 0,42% bis 0,65% beträgt,
eine Anzahl an Einschlussteilchen mit einem äquivalenten Kreisdurchmesser von 1,0 μm oder mehr, gemessen unter Verwendung von FE-SEM, 20 Stück/$mm^2$ oder weniger in einem mittleren Dickebereich in einem Querschnitt entlang einer Dickerichtung der Stahlplatte beträgt,
eine Anzahl an Nitridteilchen, die 10% oder mehr an Ti enthalten und einen äquivalenten Kreisdurchmesser von 0,05 μm oder mehr und weniger als 0,5 μm aufweisen, gemessen unter Verwendung von FE-TEM bei einer 10000-fachen bis 1000000-fachen Vergrößerung $1 \times 10^3$ Stück/$mm^2$ oder mehr und weniger als $5 \times 10^4$ Stücke/$mm^2$ in einem mittleren Dickebereich beträgt,
wobei das geschweißte Metall aus einer Zusammensetzung besteht, in Massen-%, aus C: 0,02% bis 0,10%,
Si: 0,03% bis 0,30%,
Mn: 1,2% bis 2,4%,
Al: mehr als 0,004 bis 0,05% oder weniger,
Ni: 1,0% bis 2,3%,
Ti: 0,005% bis 0,015%,
N: 0,0020% bis 0,0060%,
Nb: 0% bis 0,004%,
V: 0% bis 0,030%,
Cr: 0% bis 0,50%,
Mo: 0% bis 0,50%,
Cu: 0% bis 0,25%,
B: 0% bis 0,0030%,
Ca: 0% bis 0,0050%,
P: begrenzt auf 0,015% oder weniger,

S: begrenzt auf 0,010% oder weniger,
O: begrenzt auf 0,0020% oder weniger,
Mg: begrenzt auf 0,0002% oder weniger und
einem Rest bestehend aus Eisen und unvermeidbaren Verunreinigungen,
ein Indexwert CeEBW, erhalten durch Einsetzen der Zusammensetzung des geschweißten Metalls in eine folgende Formel 2, 0,56% bis 0,73% beträgt und
ein C/CeEBB, das ein Verhältnis einer Menge an C in Massen-% in dem Stahl zu dem Indexwert CeEBB ist, 0,02 bis 0,15 beträgt,

$$CeEBB=C+(1/4)Mn+(1/15)Cu+(1/15)Ni+(1/5)Cr+(1/5)Mo+(1/5)V \text{ ...... (Formel 1)}$$

wobei C, Mn, Cu, Ni, Cr, Mo und V Mengen in Massen-% jedes Elements, das in der Zusammensetzung des Stahls enthalten ist, darstellen und

$$CeEBW=C+(1/4)Mn+(1/15)Cu+(1/15)Ni+(1/5)Cr+(1/5)Mo+(1/5)V \text{ ......(Formel 2)}$$

wobei C, Mn, Cu, Ni, Cr, Mo und V Mengen in Massen-% jedes Elements, das in der Zusammensetzung des geschweißten Metalls enthalten ist, darstellen.

2. Die Elektronenstrahl-Schweißverbindung gemäß Anspruch 1, wobei der Stahl eine Dicke von 45 bis 150 mm aufweist.

3. Die Elektronenstrahl-Schweißverbindung gemäß Anspruch 1 oder 2, wobei, wenn ein Rissaufweitungs-CTOD-Wert des geschweißten Metalls als $\delta_{WM}$ definiert ist, ein CTOD-Wert einer Schweißwärmeeinflusszone als $\delta_{HAZ}$ definiert ist und ein CTOD-Wert des Stahls als $\delta_{BM}$ definiert ist, folgende Formeln 3 und 4 erfüllt sind, wobei die CTOD-Werte Bruchzähigkeitswerte sind, gemessen durch CTOD-Test bei einer Testtemperatur von 0°C:

$$0{,}8 \leq \delta_{BM} / \delta_{WM} \leq 1{,}25 \text{ ......(Formel 3)}$$

$$0{,}15 \leq \delta_{HAZ} / \delta W_{WM} \leq 1{,}1 \text{ ......(Formel 4)}$$

4. Ein Stahl zum Elektronenstrahl-Schweißen, wobei der Stahl aus einer Zusammensetzung besteht, in Massen-%, aus
C: 0,02% bis 0,10%,
Si: 0,05% bis 0,30%,
Mn: 1,5% bis 2,5%,
Al: mehr als 0,004% bis 0,05% oder weniger,
Ti: 0,005% bis 0,015%,
N: 0,0020% bis 0,0060%,
Nb: 0% bis 0,004%,
V: 0% bis 0,030%,
Cr: 0% bis 0,50%,
Mo: 0% bis 0,50%,
Cu: 0% bis 0,25%,
Ni: 0% bis 0,50%,
B: 0% bis 0,0030%,
Ca: 0% bis 0,0050%,
P: begrenzt auf 0,015% oder weniger,
S: begrenzt auf 0,010% oder weniger,
O: begrenzt auf 0,0035% oder weniger,
Mg: begrenzt auf 0,0002% oder weniger und
einem Rest bestehend aus Eisen und unvermeidbaren Verunreinigungen, wobei
ein Indexwert CeEBB, erhalten durch Einsetzen der Zusammensetzung des Stahls in eine nachstehende Formel 1, 0,42% bis 0,65% beträgt,
eine Anzahl an Einschlussteilchen mit einem äquivalenten Kreisdurchmesser von 1,0 μm oder mehr, gemessen

unter Verwendung von FE-SEM, 20 Stück/mm$^2$ oder weniger in einem mittleren Dickebereich in einem Querschnitt entlang einer Dickerichtung des Stahls beträgt,
eine Anzahl an Nitridteilchen, die 10% oder mehr an Ti enthalten und einen äquivalenten Kreisdurchmesser von 0,05 $\mu$m oder mehr und weniger als 0,5 $\mu$m aufweisen, gemessen unter Verwendung von FE-TEM bei einer 10000-fachen bis 1000000-fachen Vergrößerung, 1 $\times$ 10$^3$ Stück/mm$^2$ oder mehr und weniger als 5 $\times$ 10$^4$ tück/mm$^2$ in dem mittleren Dickebereich beträgt,
ein C/CeEBB, das ein Verhältnis einer Menge an C zu dem Indexwert CeEBB der Härtbarkeit nach dem Elektronenstrahl-Schweißen ist, 0,02 bis 0,15 beträgt,

$$CeEBB = C+(1/4)Mn+(1/15)Cu+(1/15)Ni+(1/5)Cr+(1/5)Mo+(1/5)V \text{ ......(Formel 1)}$$

wobei C, Mn, Cu, Ni, Cr, Mo und V Mengen in Massen-% jedes Elements, das in der Zusammensetzung des Stahls enthalten ist, darstellen.

**5.** Der Stahl zum Elektronenstrahl-Schweißen gemäß Anspruch 4, wobei der Stahl eine Dicke von 45 bis 150 mm aufweist.

**6.** Ein Verfahren zur Herstellung des Stahls für das Elektronenstrahl-Schweißen gemäß Anspruch 4, wobei das Verfahren
ein Gussverfahren des Gießens und Abkühlens des Stahls, so dass eine Abkühlgeschwindigkeit in einem Temperaturbereich von 1300°C bis 1100° 9 bis 30°C/Min. beträgt, und
ein Verfahren des Erwärmens des Stahls auf einen Temperaturbereich von 950°C bis 1150°C nach dem Gussverfahren und anschließend ein Verfahren der thermomechanischen Behandlung des Stahls umfasst.

## Revendications

**1.** Joint soudé par faisceau d'électrons fabriqué par application d'un soudage par faisceau d'électrons à un acier et formation d'un métal soudé, l'acier consistant en une composition, en % en masse,
C: 0,02 % à 0,10 %,
Si: 0,03 % à 0,30 %,
Mn: 1,5 % à 2,5 %,
Al: plus de 0,004 % à 0,05 % ou moins,
Ti: 0,005 % à 0,015 %,
N: 0,0020 % à 0,0060 %,
Nb: 0 % à 0,004 %,
V: 0 % à 0,030 %,
Cr: 0 % à 0,50 %,
Mo: 0 % à 0,50 %,
Cu: 0 % à 0,25 %,
Ni: 0 % à 0,50 %,
B: 0 % à 0,0030 %,
Ca: 0 % à 0,0050 %,
P: limité à 0,015 % ou moins,
S: limité à 0,010 % ou moins,
O: limité à 0,0035 % ou moins,
Mg: limité à 0,0002 % ou moins, et avec
un complément consistant en fer et en impuretés inévitables, où
une valeur d'indice CeEBB obtenue par substitution de la composition de l'acier dans une formule 1 suivante est 0,42 % à 0,65 %,
un nombre de particules d'inclusion ayant un diamètre de cercle équivalent de 1,0 $\mu$m ou plus mesuré au moyen de FE-SEM est 20 unités/mm$^2$ ou moins au niveau d'une partie centrale de l'épaisseur dans une coupe transversale dans une direction de l'épaisseur de l'acier,
un nombre de particules de nitrures contenant Ti à raison de 10 % ou plus et ayant un diamètre de cercle équivalent de 0,05 $\mu$m ou plus et inférieur à 0,5 $\mu$m mesuré au moyen de FE-TEM à un grossissement de 10000 fois à 1000000 fois est 1 x 10$^3$ unités/mm$^2$ ou plus et inférieur à 5 x 10$^4$ unités/mm$^2$ au niveau de la partie centrale de l'épaisseur,

le métal soudé consistant en une composition, en % en masse,
C: 0,02 % à 0,10 %,
Si: 0,03 % à 0,30 %,
Mn: 1,2 % à 2,4 %,
Al: plus de 0,004 % à 0,05 % ou moins,
Ni: 1,0 % à 2,3 %,
Ti: 0,005 % à 0,015 %,
N: 0,0020 % à 0,0060 %,
Nb: 0 % à 0,004 %,
V: 0 % à 0,030 %,
Cr: 0 % à 0,50 %,
Mo: 0 % à 0,50 %,
Cu: 0 % à 0,25 %,
B: 0 % à 0,0030 %,
Ca: 0 % à 0,0050 %,
P: limité à 0,015 % ou moins,
S: limité à 0,010 % ou moins,
O: limité à 0,0020 % ou moins,
Mg: limité à 0,0002 % ou moins, et
un complément consistant en fer et en impuretés inévitables,
une valeur d'indice CeEBW obtenue par substitution de la composition du métal soudé dans une formule 2 suivante est 0,56 % à 0,73 %, et
un C/CeEBB, qui est un rapport d'une quantité en % en masse de C dans l'acier par rapport à la valeur d'indice CeEBB, est 0,02 à 0,15,

$$CeEBB=C+(1/4)Mn+(1/15)Cu+(1/15)Ni+(1/5)Cr+(1/5)Mo+(1/5)V \quad \text{(formule 1)}$$

où C, Mn, Cu, Ni, Cr, Mo et V représentent les quantités en % en masse de chaque élément contenu dans la composition de l'acier, et

$$CeEBW=C+(1/4)Mn+(1/15)Cu+(1/15)Ni+(1/5)Cr+(1/5)Mo+(1/5)V \quad \text{(formule 2)}$$

où C, Mn, Cu, Ni, Cr, Mo et V représentent les quantités en % en masse de chaque élément contenu dans la composition du métal soudé.

**2.** Joint soudé par faisceau d'électrons selon la revendication 1, où l'acier a une épaisseur de 45 à 150 mm.

**3.** Joint soudé par faisceau d'électrons selon la revendication 1 ou 2, où, quand une valeur de déplacement d'ouverture en fond de fissure CTOD du métal soudé est définie comme étant $\delta_{WM}$, une valeur CTOD d'une zone affectée par la chaleur est définie comme étant $\delta_{HAZ}$, et une valeur CTOD de l'acier est définie comme étant $\delta_{BM}$, les formules 3 et 4 suivantes sont satisfaites, où les valeurs CTOD sont des valeurs de ténacité à la rupture mesurées par un essai CTOD à une température d'essai de 0°C:

$$0{,}8 \leq \delta_{BM} / \delta_{WM} \leq 1{,}25 \quad \text{(Formule 3)}$$

$$0{,}15 \leq \delta_{HAZ} / \delta_{WM} \leq 1{,}1 \quad \text{(Formule 4)}$$

**4.** Acier pour soudage par faisceau d'électrons, l'acier consistant en une composition, en % en masse,
C: 0,02 % à 0,10 %,
Si: 0,05 % à 0,30 %,

Mn: 1,5 % à 2,5 %,
Al: plus de 0,004 % à 0,05 % ou moins,
Ti: 0,005 % à 0,015 %,
N: 0,0020 % à 0,0060 %,
Nb: 0 % à 0,004 %,
V: 0 % à 0,030 %,
Cr: 0 % à 0,50 %,
Mo: 0 % à 0,50 %,
Cu: 0 % à 0,25 %,
Ni: 0 % à 0,50 %,
B: 0 % à 0,0030 %,
Ca:0 % à 0,0050 %,
P: limité à 0,015 % ou moins,
S: limité à 0,010 % ou moins,
O: limité à 0,0035 % ou moins,
Mg: limité à 0,0002 % ou moins, et
un complément consistant en fer et en impuretés inévitables, où
une valeur d'indice CeEBB obtenue par substitution de la composition de l'acier dans une formule 1 suivante est 0,42 % à 0,65 %,
un nombre de particules d'inclusion ayant un diamètre de cercle équivalent de 1,0 μm ou plus mesuré au moyen de FE-SEM est 20 unités/$mm^2$ ou moins au niveau d'une partie centrale de l'épaisseur dans une coupe transversale dans une direction de l'épaisseur de l'acier,
un nombre de particules de nitrures contenant Ti à raison de 10 % ou plus et ayant un diamètre de cercle équivalent de 0,05 μm ou plus et inférieur à 0,5 μm mesuré au moyen de FE-TEM à un grossissement de 10000 fois à 1000000 fois est 1 x $10^3$ unités/$mm^2$ ou plus et inférieur à 5 x $10^4$ unités/$mm^2$ au niveau de la partie centrale de l'épaisseur,
un C/CeEBB, qui est un rapport d'une quantité de C par rapport à la valeur d'indice CeEBB de l'aptitude à la trempe après le soudage par faisceau d'électrons, est 0,02 à 0,15,

$$CeEBB = C+(1/4)Mn+(1/15)Cu+(1/15)Ni+(1/5)Cr+(1/5)Mo+(1/5)V \quad \text{(formule 1)}$$

où C, Mn, Cu, Ni, Cr, Mo et V représentent les quantités en % en masse de chaque élément contenu dans la composition de l'acier.

**5.** Acier pour soudage par faisceau d'électrons selon la revendication 4, où l'acier a une épaisseur de 45 à 150 mm.

**6.** Procédé de fabrication de l'acier pour soudage par faisceau d'électrons selon la revendication 4, le procédé comprenant,
un processus de coulée de coulée et de refroidissement de l'acier de sorte qu'une vitesse de refroidissement dans une plage de température de 1300°C à 1100°C est 9 à 30°C/min, et
un processus de chauffage de l'acier dans une plage de température de 950°C à 1150°C après le processus de coulée, et ensuite un traitement thermomécanique de l'acier.

FIG. 1

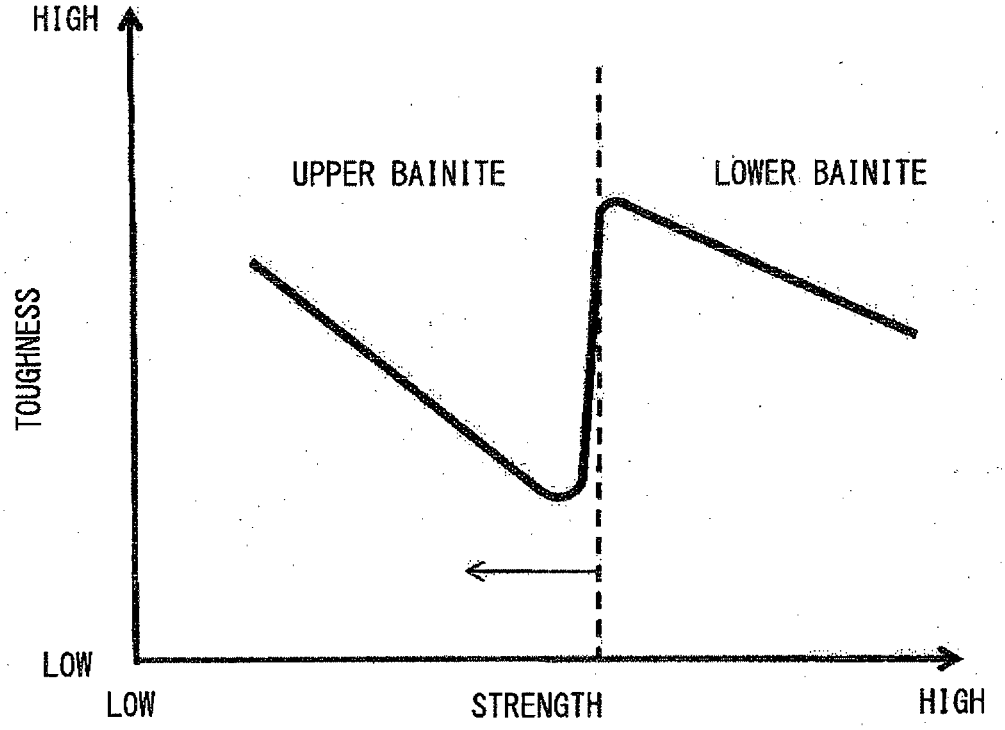
HIGH
TOUGHNESS
LOW
UPPER BAINITE
LOWER BAINITE
LOW
STRENGTH
HIGH

FIG. 2A

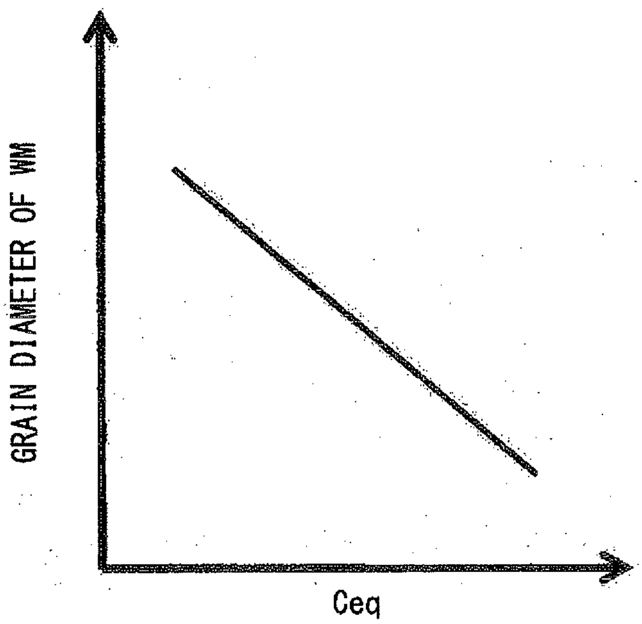
GRAIN DIAMETER OF WM
Ceq

FIG. 2B

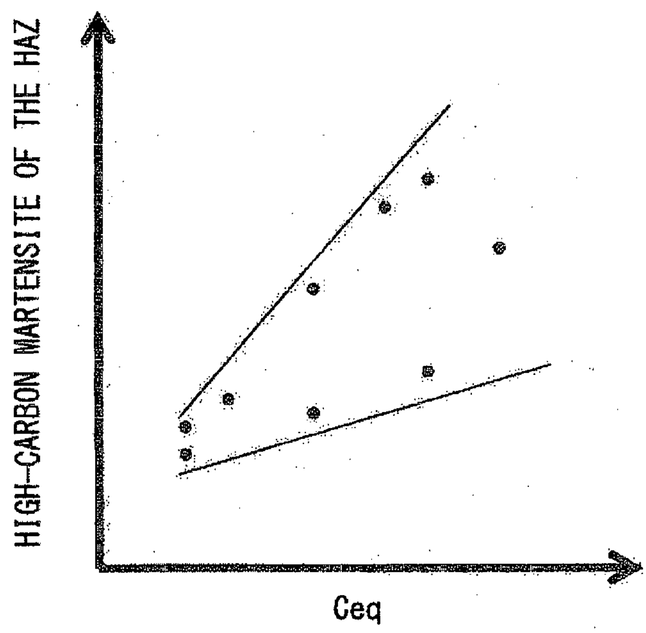
HIGH-CARBON MARTENSITE OF THE HAZ
Ceq

FIG. 3

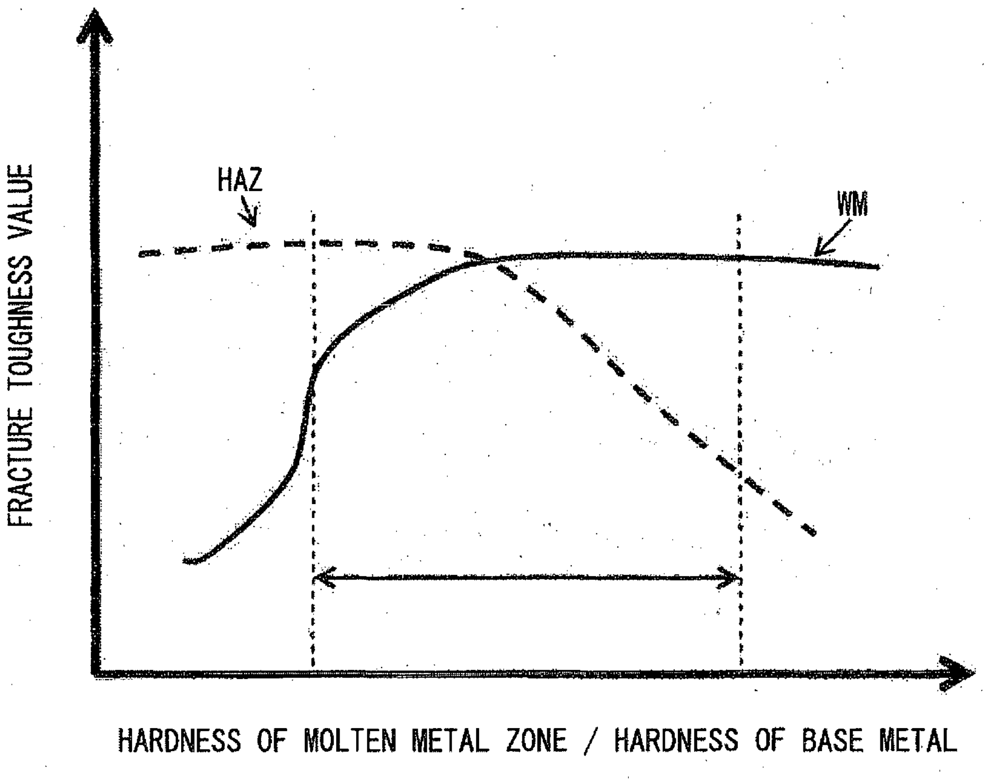
FRACTURE TOUGHNESS VALUE
HAZ
WM
HARDNESS OF MOLTEN METAL ZONE / HARDNESS OF BASE METAL

FIG. 4

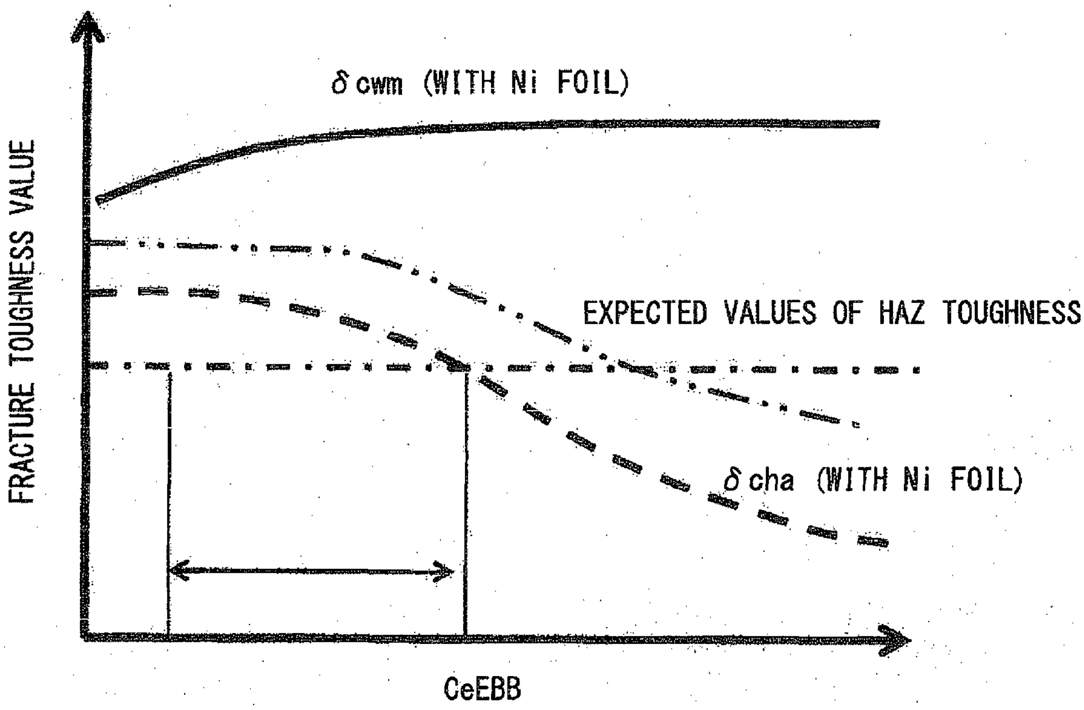
FRACTURE TOUGHNESS VALUE
δ cwm (WITH Ni FOIL)
EXPECTED VALUES OF HAZ TOUGHNESS
δ cha (WITH Ni FOIL)
CeEBB

FIG. 5

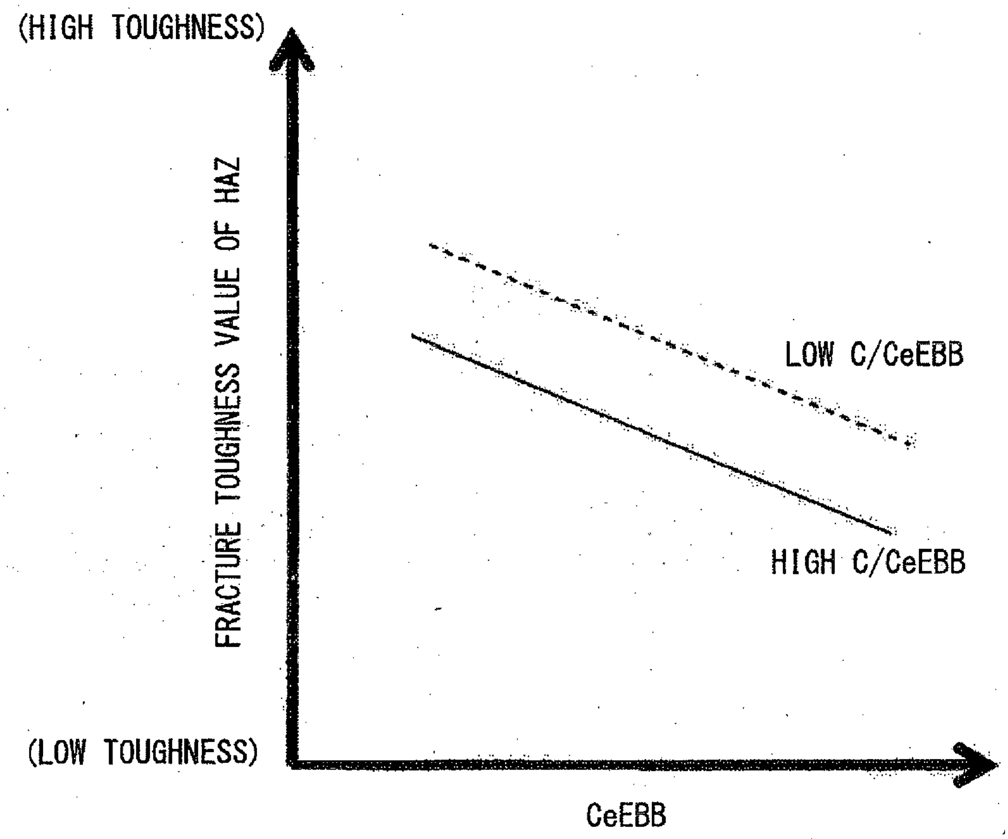
(HIGH TOUGHNESS)
FRACTURE TOUGHNESS VALUE OF HAZ
LOW C/CeEBB
HIGH C/CeEBB
(LOW TOUGHNESS)
CeEBB

FIG. 6

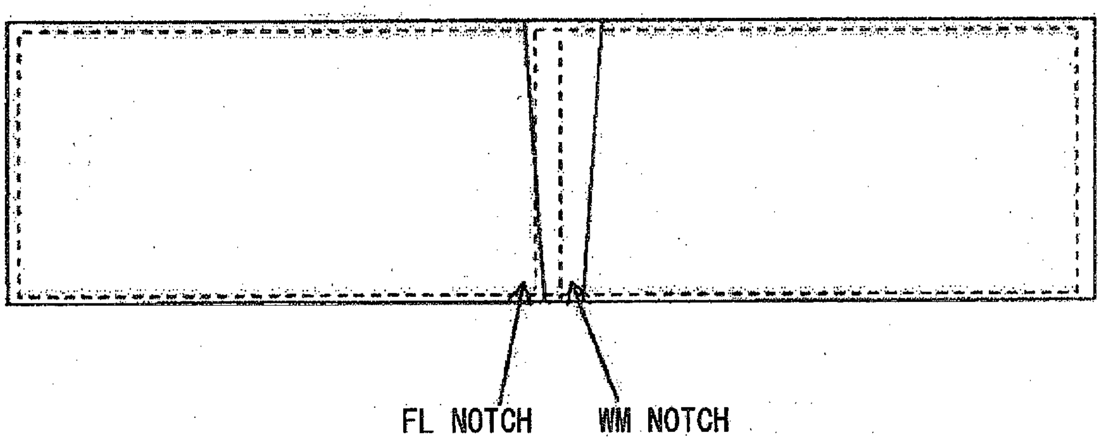
FL NOTCH
WM NOTCH

FIG. 7

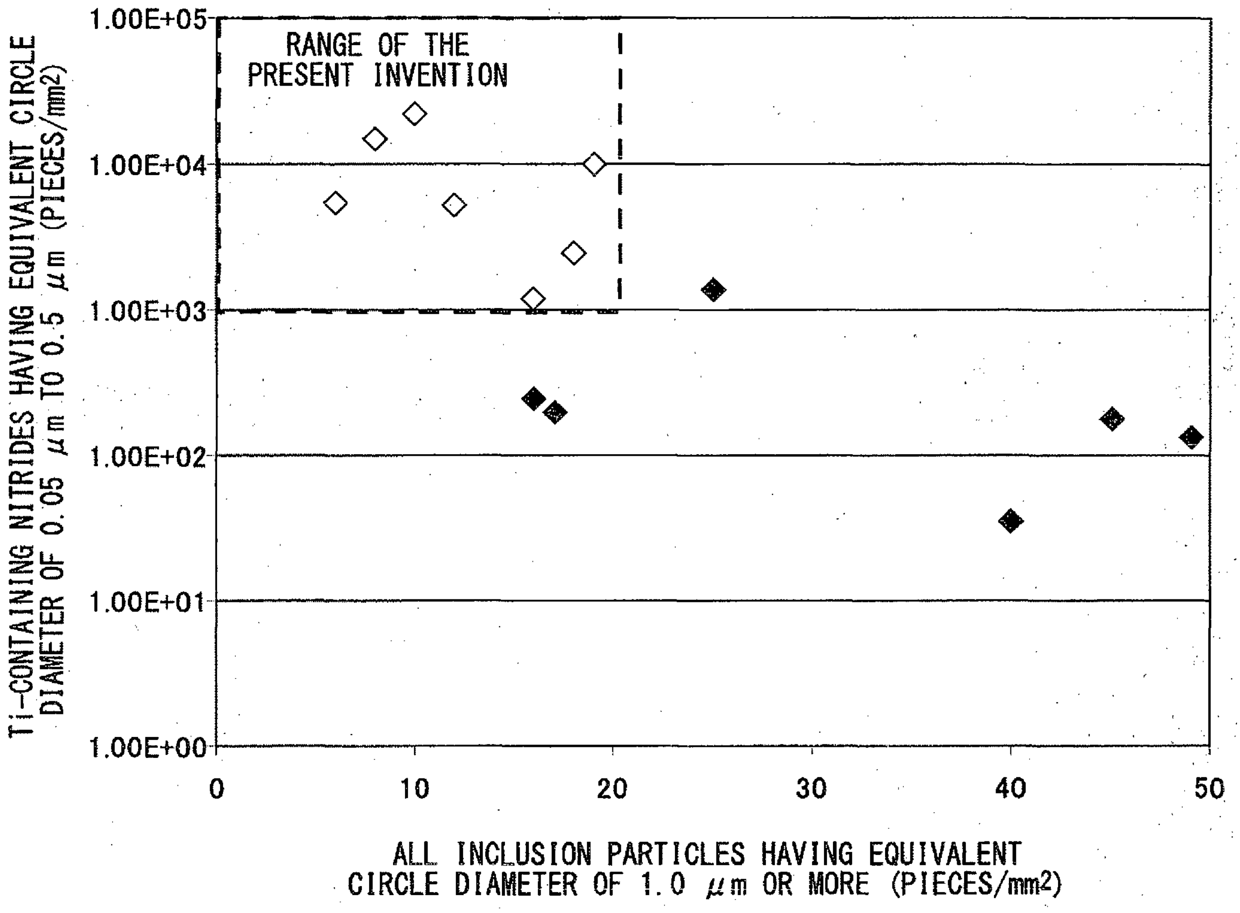

RANGE OF THE PRESENT INVENTION
1.00E+05
1.00E+04
1.00E+03
1.00E+02
1.00E+01
1.00E+00
0
10
20
30
40
50
Ti-CONTAINING NITRIDES HAVING EQUIVALENT CIRCLE DIAMETER OF 0.05 μm TO 0.5 μm (PIECES/mm2)
ALL INCLUSION PARTICLES HAVING EQUIVALENT CIRCLE DIAMETER OF 1.0 μm OR MORE (PIECES/mm2)

FIG. 8A

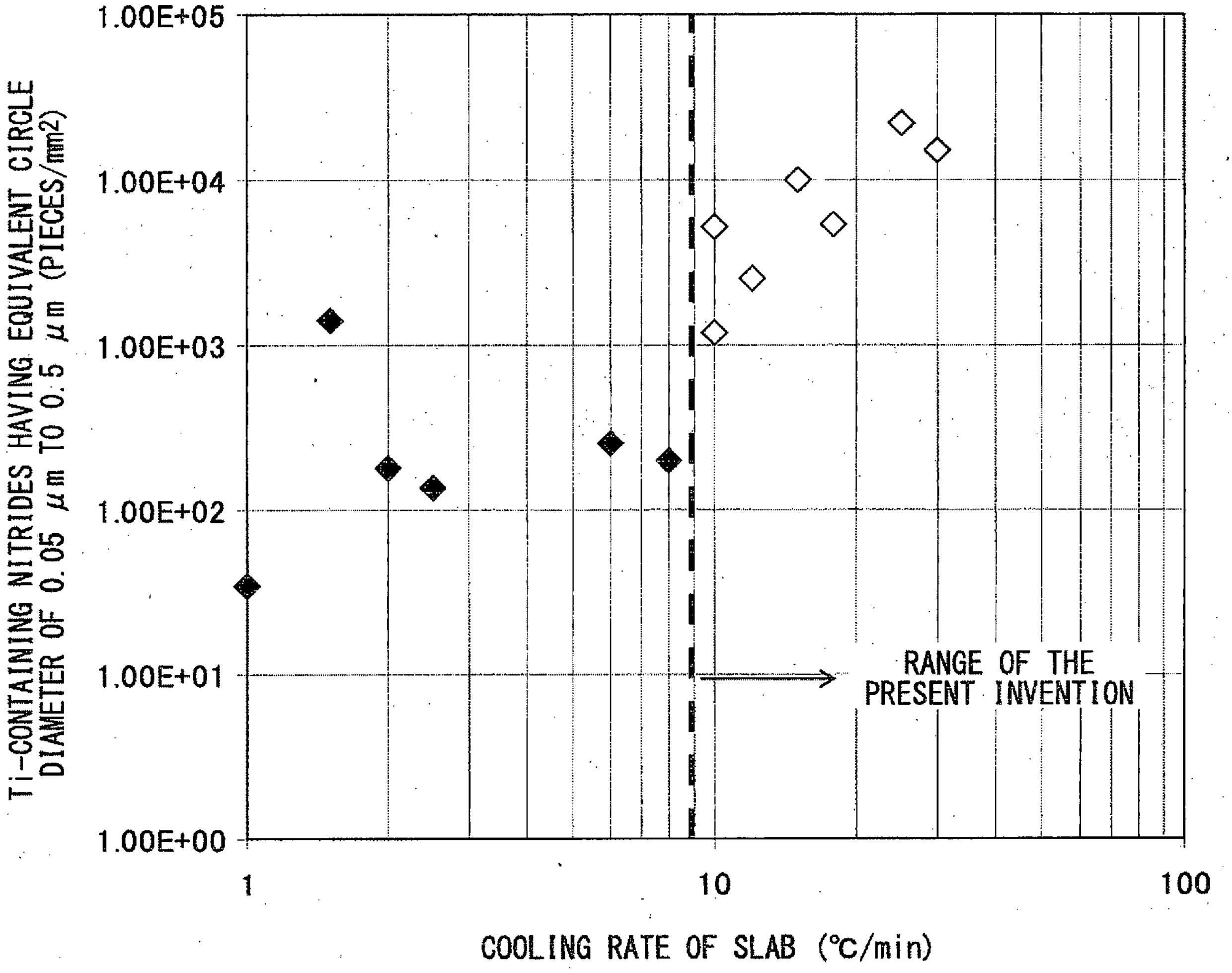
1.00E+05
1.00E+04
1.00E+03
1.00E+02
1.00E+01
1.00E+00
Ti-CONTAINING NITRIDES HAVING EQUIVALENT CIRCLE DIAMETER OF 0.05 μm TO 0.5 μm (PIECES/mm2)
1
10
100
COOLING RATE OF SLAB (°C/min)
RANGE OF THE PRESENT INVENTION

FIG. 8B

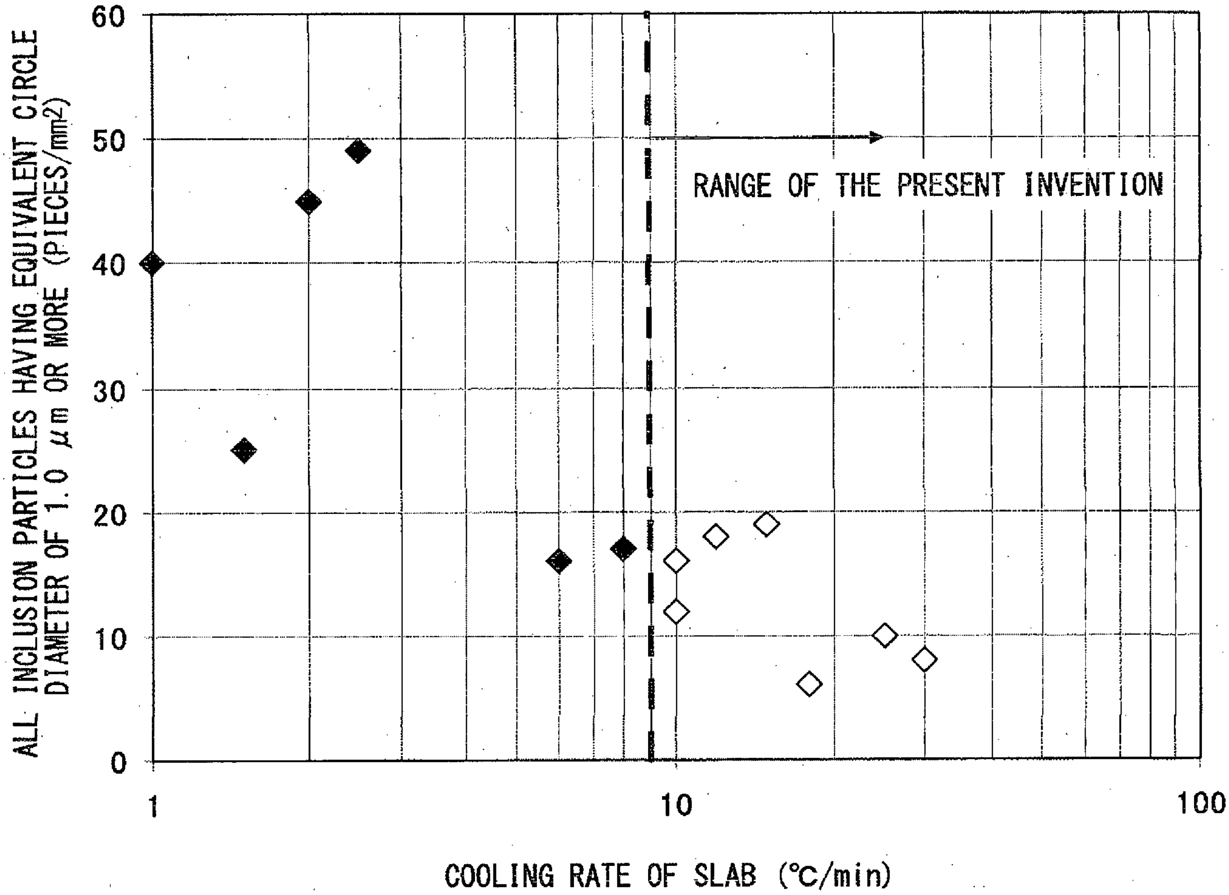
ALL INCLUSION PARTICLES HAVING EQUIVALENT CIRCLE DIAMETER OF 1.0 μm OR MORE (PIECES/mm2)
60
50
40
30
20
10
0
RANGE OF THE PRESENT INVENTION
1
10
100
COOLING RATE OF SLAB (°C/min)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008111406 A
- JP 2007092406 A
- JP 2006322400 A
- JP 2006037397 A
- WO 9916101 A
- JP 2007021532 A
- JP 2008088504 A
- JP 2004011008 A
- JP 2003293079 A
- JP 2007277681 A
- EP 2236631 A1
- EP 1736562 A1
- WO 2010052927 A1
- EP 1777315 A1
- JP 2008214754 A
- JP 2001089825 A
- JP 2001323336 A
- JP 2006241551 A
- JP 2009041057 A
- JP 2007046096 A